# EUROPEAN PATENT APPLICATION

(11) **EP 4 589 972 A1**
(43) Date of publication of application: **23.07.2025**
(21) Application number: 23889018.0
(22) Date of filing: 31.10.2023
(51) Int. Cl.: H04N 23/57, H04N 23/90, H04N 23/54, H04N 23/55, H05K 3/32

(54) **CAMERA DEVICE COMPRISING CONNECTION STRUCTURE, AND ELECTRONIC DEVICE COMPRISING SAME**

(30) Priority: 07.11.2022 KR 20220146962; 25.11.2022 KR 20220160338
(71) Applicant: Samsung Electronics Co., Ltd., Suwon-si, Gyeonggi-do 16677 (KR)
(72) Inventor: LEE, Haneul, Suwon-si, Gyeonggi-do 16677 (KR); KIM, Jongsoo, Suwon-si, Gyeonggi-do 16677 (KR); KIM, Jeongseob, Suwon-si, Gyeonggi-do 16677 (KR); ROH, Jaeyoung, Suwon-si, Gyeonggi-do 16677 (KR); JUN, Intae, Suwon-si, Gyeonggi-do 16677 (KR)
(74) Representative: Appleyard Lees IP LLP
(86) International application number: PCT/KR2023/017165
(87) International publication number: WO 2024/101756

(57) **Abstract**

An electronic device according to one embodiment of the present disclosure comprises: a housing forming the exterior of the electronic device; a main printed circuit board disposed inside the housing; a first camera unit which is disposed in one direction of the main printed circuit board and which includes a first printed circuit board, a first image sensor, a first lens assembly, a first housing and a first contact pin; and a second camera unit which is disposed on one side of the first camera unit and which includes a second printed circuit board, a second image sensor, a second lens assembly, a second housing and a second contact pin, wherein the first printed circuit board includes electrical wiring connected to each of the first camera unit and the second camera unit, and can be connected to the main printed circuit board.

## Description

### [Technical Field]

The disclosure relates to a camera including a connection structure and an electronic device including the camera.

### [Background Art]

An electronic device may include multiple camera modules therein. Each of the multiple camera modules may be connected to a main printed circuit board of the electronic device through a separate connector. For example, each of the multiple camera modules may include a flexible printed circuit board, and may be electrically connected to the main printed circuit board of the electronic device via a connector positioned at a distal end of the flexible printed circuit board.

The camera module may be fixed inside the electronic device through a separate fixing structure. For example, a fixing structure for fixing the camera module may be provided on at least a portion of the electronic device (e.g., a back cover or a guide bracket).

### [Disclosure of Invention]

### [Technical Problem]

Since the multiple camera modules are connected to the main printed circuit board via separate connectors, respectively, an arrangement space may be additionally required to arrange the flexible printed circuit board and the connector connected to each camera module. Since a space should be individually secured for a flexible printed circuit board and a connector connected to each camera module, the space available for arranging other components inside the electronic device may be limited.

### [Solution to Problem]

According to an embodiment of the disclosure, an electronic device may include a housing forming an exterior of the electronic device, a main printed circuit board disposed inside the housing, a first camera unit, and/or a second camera unit.

According to an embodiment of the disclosure, the first camera unit may be disposed in one direction of the main printed circuit board and include a first printed circuit board, a first image sensor disposed on the first printed circuit board, a first lens assembly disposed to correspond to the first image sensor, a first housing surrounding the outer periphery of the first image sensor and the first lens assembly, and a first contact pin disposed on at least one surface of the first housing and being in contact with the first printed circuit board at least in part to be electrically connected to the first printed circuit board.

According to an embodiment of the disclosure, a second camera unit may be disposed on one side of the first camera unit and include a second printed circuit board, a second image sensor disposed on the second printed circuit board, a second lens assembly disposed to correspond to the second image sensor, a second housing surrounding the outer periphery of the second image sensor and the second lens assembly and coupled to the first housing at least in part, and a second contact pin disposed on at least one surface of the second housing and being in contact with the second printed circuit board at least in part to be electrically connected to the second printed circuit board.

In an embodiment, the first printed circuit board may include electrical wires connected to the first camera unit and the second camera unit, respectively, and may extend in a direction toward the main printed circuit board to be connected to the main printed circuit board.

In an embodiment, a camera device may include a first camera unit and/or a second camera unit.

### [Advantageous Effects of Invention]

A camera device including a connection structure according to an embodiment of the present disclosure, and an electronic device including the camera device may reduce a space required to connect multiple camera units (e.g., camera modules) to a main printed circuit board by electrically connecting multiple camera units to one another through the connection structure.

A camera device including a connection structure according to an embodiment of the disclosure, and an electronic device including the camera device may eliminate the need for a separate fixing structure to fix the camera units by allowing the multiple camera units to be coupled to one another.

A camera including a connection structure according to an embodiment of the disclosure, and an electronic device including the camera allow multiple camera units to be decoupled after being coupled, thereby facilitating the individual replacement of the camera units.

### [Brief Description of Drawings]

FIG. 1 is a block diagram of an electronic device according to an embodiment in a network environment.
FIG. 2 is a view illustrating an electronic device according to an embodiment of the disclosure.
FIGS. 3A, 3B, 3C, and 3D illustrate a first camera unit according to an embodiment of the disclosure.
FIGS. 4A, 4B, 4C, and 4D illustrate a second camera unit according to an embodiment of the disclosure.
FIG. 5 is a view illustrating a first camera unit and a second camera unit according to an embodiment of the disclosure.
FIGS. 6A and 6B are views illustrating the coupling of the first camera unit and the second camera unit according to an embodiment of the disclosure.
FIGS. 7A and 7B are views illustrating the coupled state of the first camera unit and the second camera unit according to an embodiment of the disclosure.
FIGS. 9A, 9B, 9C, 9D, and 9E are views illustrating coupling openings in the first camera unit and protrusions of the second camera unit according to an embodiment of the disclosure.
FIGS. 10A, 10B, and 10C are views illustrating a connector and an electrical wire according to an embodiment of the disclosure.
FIG. 11 is a view illustrating two second camera units coupled to a first camera unit according to an embodiment of the disclosure.
FIGS. 12A and 12B are views illustrating a (1-1)^{th} camera unit and a (1-2)^{th} camera unit according to an embodiment of the disclosure.

### [Mode for the Invention]

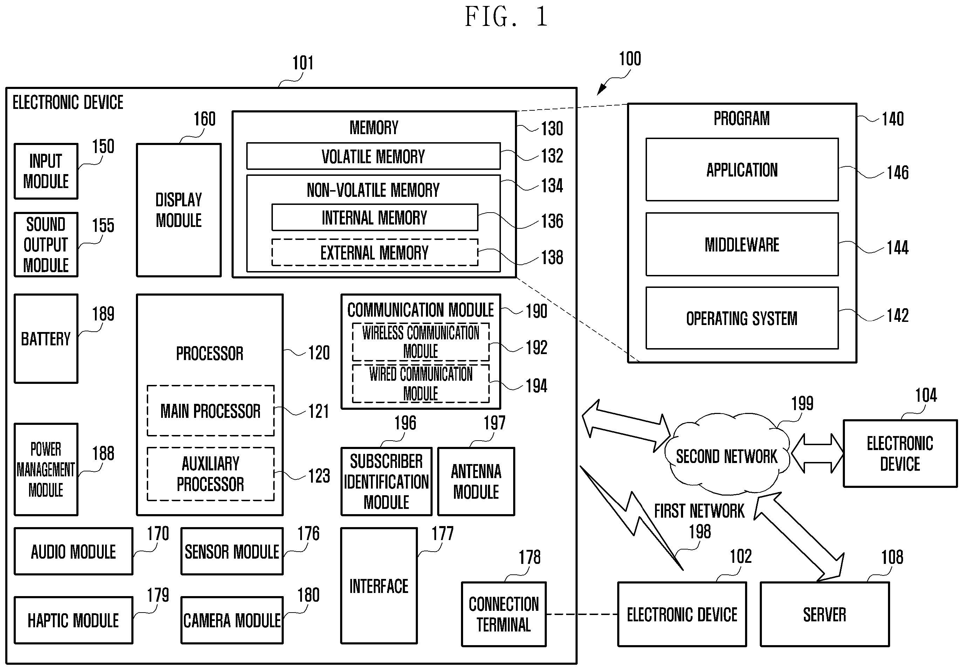

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

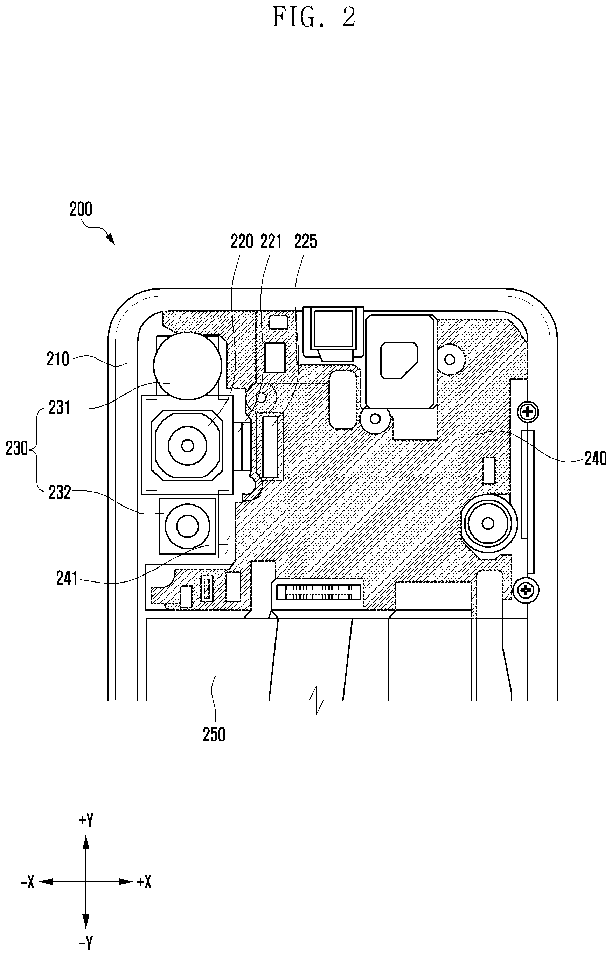

FIG. 2 is a view illustrating an electronic device 200 according to an embodiment of the disclosure.

In describing the electronic device 200 according to an embodiment of the disclosure, the width direction of the electronic device 200 may refer to the X-axis direction, and the length direction of the electronic device 200 may refer to the Y-axis direction.

The electronic device 200 according to an embodiment of the disclosure may include a housing 210, a first camera unit 220, a second camera unit 230, a main printed circuit board 240, and/or a battery 250.

In an embodiment, the housing 210 may form the exterior of the electronic device 200. The components of the electronic device 200 may be disposed inside the housing 210. For example, the first camera unit 220, the second camera unit 230, the main printed circuit board 240, and/or the battery 250 may be disposed inside the housing 210.

In an embodiment, the first camera unit 220 and the second camera unit 230 may correspond to the camera module 180 illustrated in FIG. 1. For example, the first camera unit 220 and the second camera unit 230 may perform functions of capturing still images and videos. The first camera unit 220 and the second camera unit 230 may include at least one lens.

In an embodiment, the main printed circuit board 240 may, at least in part, include an arrangement area 241 in which the first camera unit 220 and the second camera unit 230 may be disposed. The arrangement area 241 may be formed by cutting a portion of the main printed circuit board 240.

In an embodiment, the first camera unit 220 and the second camera unit 230 may be disposed in the arrangement area 241.

In an embodiment, the first camera unit 220 may include a flexible printed circuit board 221 and/or a connector 225. The flexible printed circuit board 221 may extend from the first camera unit 220 toward the main printed circuit board 240. The connector 225 may be disposed at a distal end of the flexible printed circuit board 221.

In an embodiment, the first camera unit 220 may, at least in part, be electrically connected to the main printed circuit board 240. For example, the first camera unit 220 may be electrically connected to the main printed circuit board 240 via the connector 225 disposed at the distal end of the flexible printed circuit board 221.

In an embodiment, the second camera unit 230 may include a (2-1)^{th} camera unit 231 and/or a (2-2)^{th} camera unit 232.

In an embodiment, second camera units 230 may be disposed on opposite sides of the first camera unit 220. One side of the first camera unit 220 may refer to the +Y-axis direction relative to the first camera unit 220, and the other side of the first camera unit 220 may refer to the -Y-axis direction relative to the first camera unit 220. The (2-1)^{th} camera unit 231 may be disposed on the one side of the first camera unit 220, and the (2-2)^{th} camera unit 232 may be disposed on the other side of the first camera unit 220.

In an embodiment, the (2-1)^{th} camera unit 231 and the (2-2)^{th} camera unit 232 may be electrically connected to the first camera unit 220. Since the first camera unit 220 is electrically connected to the main printed circuit board 240, the (2-1)^{th} camera unit 231 and the (2-2)^{th} camera unit 232 may be electrically connected to the main printed circuit board 240 via the first camera unit 220. For example, the (2-1)^{th} camera unit 231 and the (2-2)^{th} camera unit 232 may be electrically connected to the main printed circuit board 240 via the flexible printed circuit board 221 of the first camera unit 220 and the connector 225 disposed at the distal end of the flexible printed circuit board 221.

In an embodiment, the battery 250 may be positioned in one direction of the main printed circuit board 240. For example, the battery 250 may be positioned in the -Y-axis direction relative to the main printed circuit board 240. The battery 250 may supply power to the main printed circuit board 240.

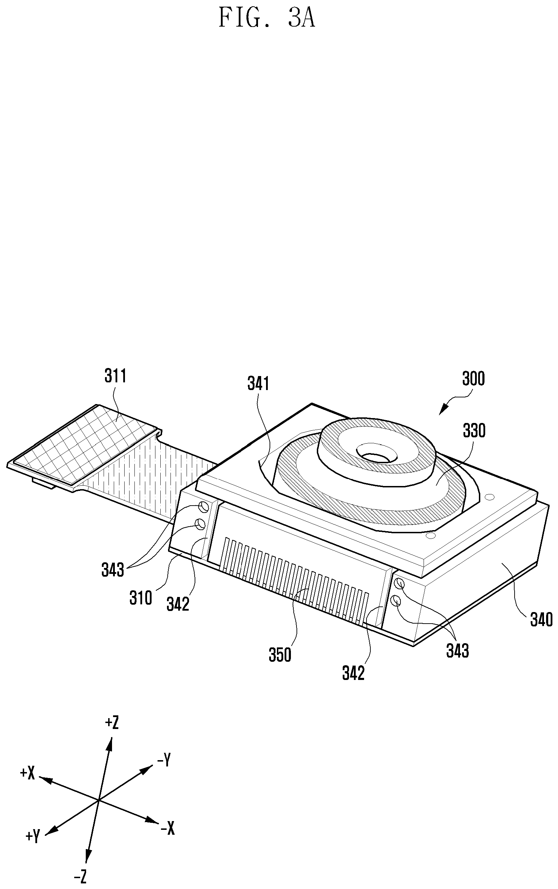

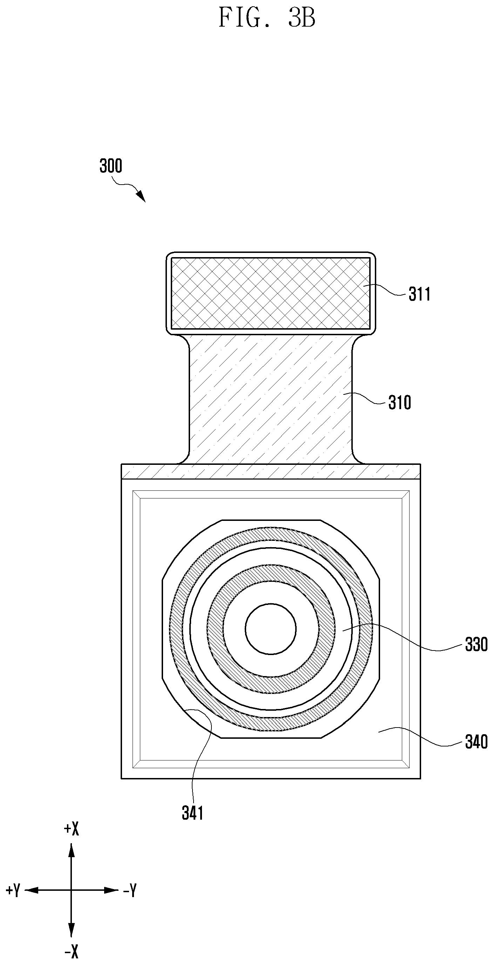

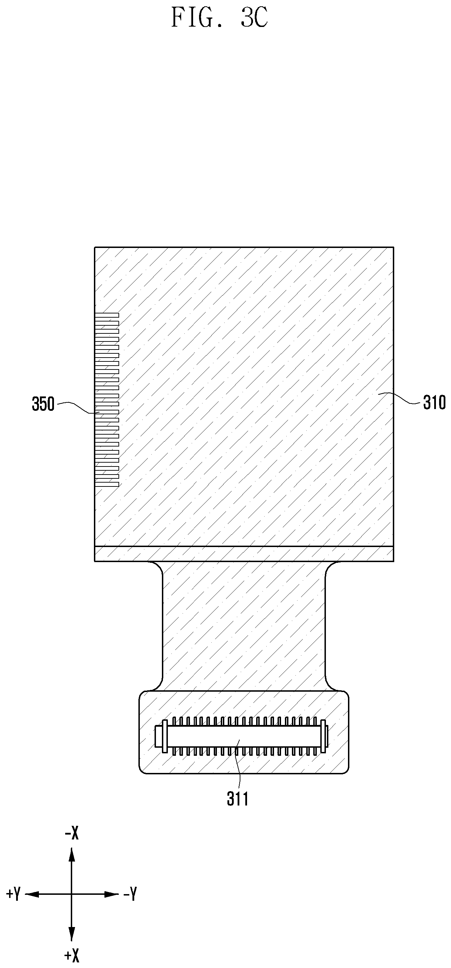

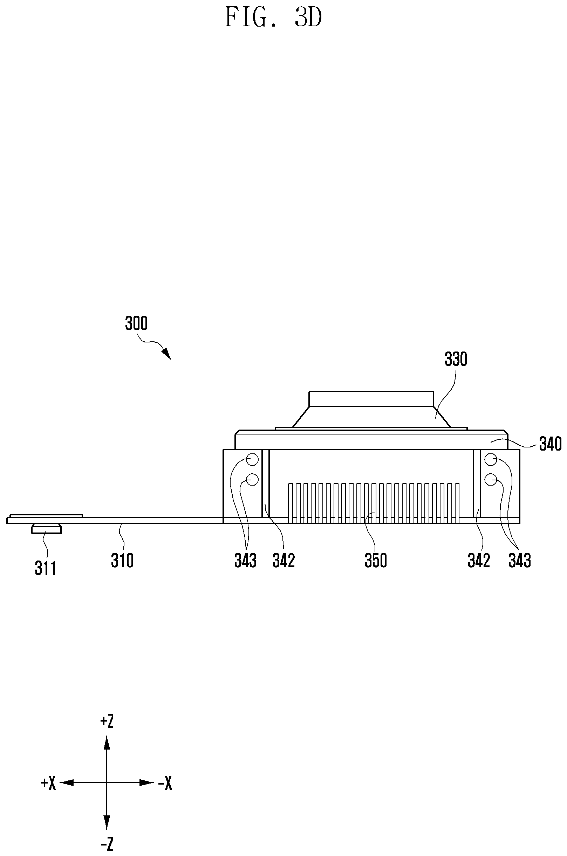

FIGS. 3A, 3B, 3C, and 3D illustrate a first camera unit 300 according to an embodiment of the disclosure.

FIG. 3A is a perspective view of the first camera unit 300 according to an embodiment. FIG. 3B is a plan view of the first camera unit 300 according to an embodiment. FIG. 3C is a view of the first camera unit 300 viewed from the opposite direction of FIG. 3B according to an embodiment. FIG. 3D is a side view of the first camera unit 300 according to an embodiment.

In an embodiment, the first camera unit 300 illustrated in FIGS. 3A, 3B, 3C, and 3D may refer to the first camera unit 220 illustrated in FIG. 2.

In describing the first camera unit 300 according to an embodiment of the disclosure, the width direction of the first camera unit 300 may refer to the X-axis direction, and the length direction of the first camera unit 300 may refer to the Y-axis direction. The height direction of the first camera unit 300 may refer to the Z-axis direction.

The first camera unit 300 according to an embodiment of the disclosure may include a first printed circuit board 310, a first lens assembly 330, a first housing 340, and/or a first contact pin 350.

Referring to FIGS. 3A, 3B, 3C, and 3D, the first lens assembly 330 and the first housing 340 may be disposed in one direction of the first printed circuit board 310. For example, the first lens assembly 330 and the first housing 340 may be disposed in the +Z-axis direction relative to the first printed circuit board 310.

In an embodiment, the first housing 340 may be disposed to surround the outer periphery of the first lens assembly 330. For example, the first housing 340 may include a first housing opening 341, and the first lens assembly 330 may be disposed in the first housing opening 341.

In an embodiment, the first lens assembly 330 may include a camera lens capable of capturing still images and videos. The first lens assembly 330 may, at least in part, protrude in a direction away from one surface of the first housing 340 (e.g., the +Z-axis direction).

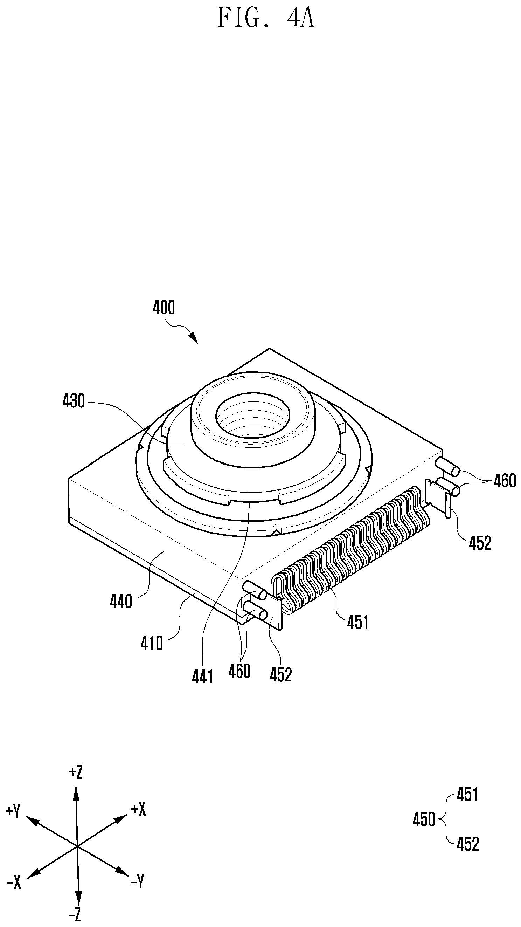

In an embodiment, the first contact pin 350 may be disposed on at least one surface of the first housing 340. The surface of the first housing 340 where the first contact pin 350 is disposed may correspond to a surface on which a second camera unit 400 (see FIG. 4A) that is coupled with the first camera unit 300 is disposed.

Referring to FIG. 3A, the first contact pin 350 may be disposed on the surface of the first housing 340 oriented in the +Y-axis direction. However, this is merely exemplary, and the surface on which the first contact pin 350 is disposed is not limited thereto. For example, the first contact pin 350 may also be disposed on the surface of the first housing 340 oriented in the -Y-axis direction, the +X-axis direction, and/or the -X-axis direction.

In an embodiment, the first contact pin 350 may include an elastic material. Since the first contact pin 350 includes an elastic material, when the first camera unit 300 and the second camera unit 400 (see FIG. 4A) are coupled, the shape of the first contact pin 350 may be elastically deformed.

In an embodiment, multiple first contact pins 350 may be disposed on at least one surface of the first housing 340. For example, referring to FIGS. 3A and 3D, the multiple first contact pins 350 may be disposed at intervals in the X-axis direction on one surface of the first housing 340.

In an embodiment, at least some of the first contact pins 350 may be disposed on the first printed circuit board 310. For example, some of the first contact pins 350 may be disposed on the surface of the first printed circuit board 310 oriented in the -Z-axis direction. Referring to FIG. 3C, the first contact pins 350 may extend along the Y-axis direction on the first printed circuit board 310. Referring to FIGS. 3A, 3B, 3C, and 3D, the first contact pins 350 may extend in the length direction of the first camera unit 300 (e.g., the Y-axis direction) and may be bent at least in part and extend in the height direction of the first camera unit 300 (e.g., the Z-axis direction).

In an embodiment, the first housing 340 may include a coupling area 342 at least in part. Referring to FIGS. 3A and 3D, the coupling area 342 may be provided on one surface of the first housing 340 where the first contact pins 350 are disposed.

In an embodiment, two coupling areas 342 may be provided with the first contact pins 350 interposed therebetween. For example, referring to FIG. 3D, the coupling areas 342 may be provided to be spaced apart from the first contact pins 350 in the -X-axis direction and the +X-axis direction. The coupling areas 342 may be areas where fixing pins 452 (see FIG. 4A) of the second camera unit 400 (see FIG. 4A) are disposed.

In an embodiment, the first housing 340 may include a coupling opening 343 at least in part. Referring to FIGS. 3A and 3D, the coupling opening 343 may be formed on one surface of the first housing 340 where the first contact pins 350 are disposed.

In an embodiment, multiple coupling openings 343 may be provided with the first contact pins 350 interposed therebetween. For example, referring to FIG. 3D, at least one coupling opening 343 may be provided to be spaced apart from the first contact pins 350 in each of the -X-axis direction and the +X-axis direction. The coupling areas 342 and the first contact pins 350 may be disposed between multiple coupling openings 343 in the width direction of the first camera unit 300 (e.g., the X-axis direction). The coupling openings 343 may be openings into which the protrusions 460 of the second camera unit 400 are inserted.

In an embodiment, the first printed circuit board 310 may, at least in part, extend longer compared to the first housing 340. For example, the first printed circuit board 310 may extend longer in the x-axis direction compared to the first housing 340. The area of the first printed circuit board 310 extending longer than the first housing 340 may include a flexible printed circuit board FPCB.

In an embodiment, the first printed circuit board 310 may include a connector 311. For example, the connector 311 may be disposed at a distal end of the first printed circuit board 310 oriented in the +X-axis direction.

In an embodiment, the connector 311 may be disposed on the main printed circuit board 240 (see FIG. 2). The first camera unit 300 may be electrically connected to the main printed circuit board 240 (see FIG. 2) via the connector 311.

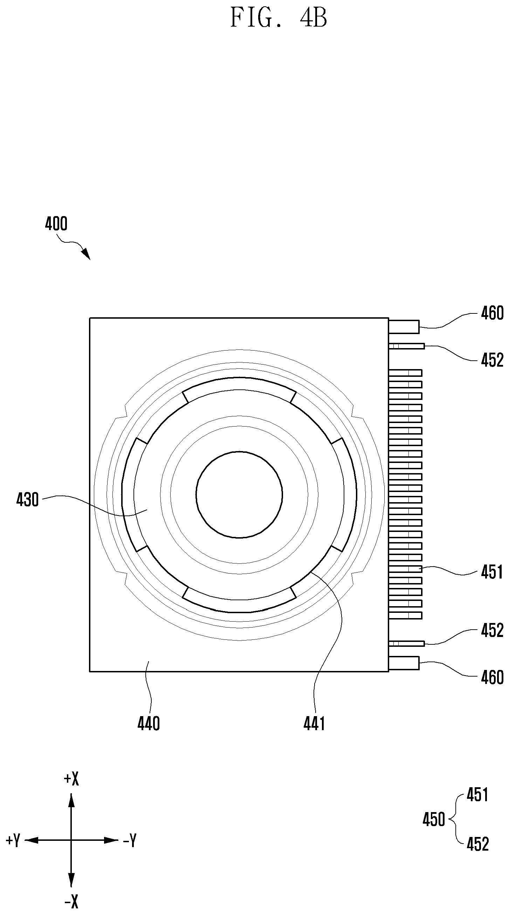

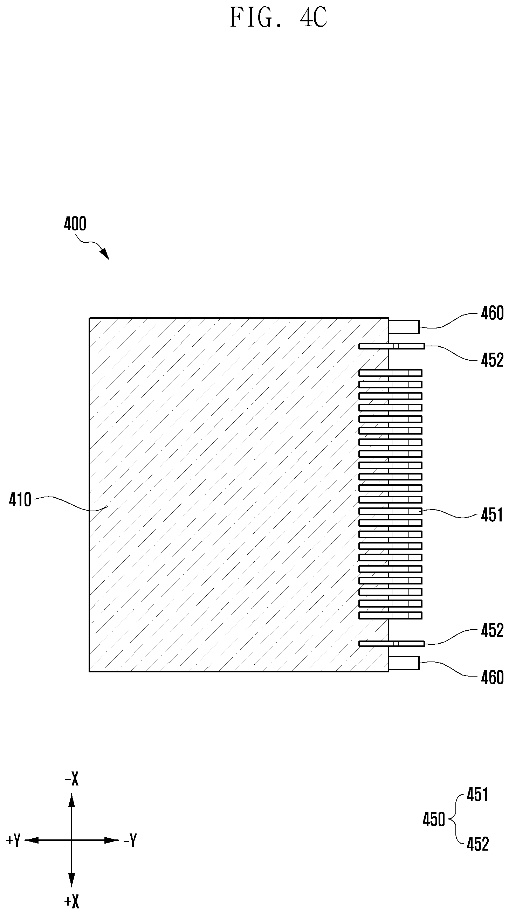

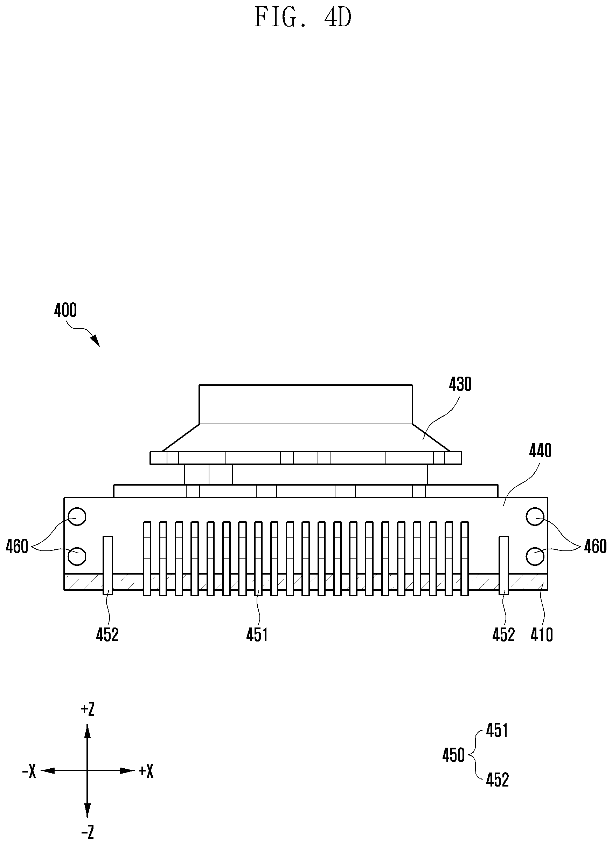

FIGS. 4A, 4B, 4C, and 4D illustrate a second camera unit 400 according to an embodiment of the disclosure.

FIG. 4A is a perspective view of the second camera unit 400 according to an embodiment. FIG. 4B is a plan view of the second camera unit 400 according to an embodiment. FIG. 4C is a view of the second camera unit 400 viewed from the opposite direction of FIG. 4B according to an embodiment. FIG. 4D is a side view of the second camera unit 400 according to an embodiment.

In an embodiment, the first camera unit 400 illustrated in FIGS. 4A, 4B, 4C, and 4D may refer to the second camera unit 230 illustrated in FIG. 2.

In describing the second camera unit 400 according to an embodiment of the disclosure, the width direction of the second camera unit 400 may refer to the X-axis direction, and the length direction of the second camera unit 400 may refer to the Y-axis direction. The height direction of the second camera unit 400 may refer to the Z-axis direction.

The second camera unit 400 according to an embodiment of the disclosure may include a second printed circuit board 410, a second lens assembly 430, a second housing 440, a second contact pin 450, and/or a protrusion 460.

Referring to FIGS. 4A, 4B, 4C, and 4D, the second lens assembly 430 and the second housing 440 may be disposed in one direction of the second printed circuit board 410. For example, the second lens assembly 430 and the second housing 440 may be disposed in the +Z-axis direction relative to the second printed circuit board 410.

In an embodiment, the second housing 440 may be disposed to surround the outer periphery of the second lens assembly 430. For example, the second housing 440 may include a second housing opening 441, and the second lens assembly 430 may be disposed in the second housing opening 441.

In an embodiment, the second lens assembly 430 may include a camera lens capable of capturing still images and videos. The second lens assembly 430 may, at least in part, protrude in a direction away from one surface of the second housing 440 (e.g., the +Z-axis direction).

In an embodiment, the second contact pin 450 may be disposed on at least one surface of the second housing 440. For example, the second contact pin 450 may be disposed on a surface of the second housing 440 oriented in the +Y-axis direction.

Although the second contact pin 450 is illustrated in FIG. 4A as being disposed on the surface of the second housing 440 oriented in the +Y-axis direction, this is merely exemplary, and the surface on which the second contact pin 450 is disposed is not limited thereto. For example, the second contact pin 450 may also be disposed on a surface of the second housing 440 oriented in the -Y-axis direction and/or the X-axis direction.

In an embodiment, multiple second contact pins 450 may be disposed on at least one surface of the second housing 440. For example, referring to FIGS. 3A and 3D, the multiple second contact pins 450 may be disposed at intervals in the X-axis direction on one surface of the second housing 440.

In an embodiment, the second contact pins 450 may include an elastic material. Since the second contact pins 450 includes an elastic material, when the first camera unit 300 (see FIG. 3A) and the second camera unit 400 are coupled, the shape of the second contact pins 450 may be elastically deformed.

In an embodiment, the second contact pins 450 may include second connection pins 451 and/or a fixing pins 452.

In an embodiment, when the first camera unit 300 and the second camera unit 400 are coupled, the second connection pins 451 of the second camera unit 400 may be in contact with the first contact pins 350 of the first camera unit 300 (see FIG. 3A). The first contact pins 350 (see FIG. 3A) and the second connection pins 451 may come into contact with each other, allowing the first camera unit 300 and the second camera unit 400 to be electrically connected.

In an embodiment, the first contact pins 350 (see FIG. 3A) and the second connection pins 451 may be used for power connection, ground connection, and/or data transmission between the first camera unit 300 and the second camera unit 400. Since the first contact pins 350 and the second connection pins 451 are in contact with and are electrically connected to each other, power connection, ground connection, and/or data transmission between the first camera unit 300 and the second camera unit 400 may be possible.

In an embodiment, the fixing pins 452 may serve to secure the first camera unit 300 and the second camera unit 400 in a coupled state. When the first camera unit 300 and the second camera unit 400 are coupled, the fixing pins 452 may be disposed in the coupling area 342 of the first camera unit 300.

In an embodiment, two fixing pins 452 may be disposed with the multiple connection pins 451 interposed therebetween. Referring to FIG. 4B, the multiple connection pins 451 may be disposed at intervals in the X-axis direction. The fixing pins 452 may each be positioned to be spaced apart from the multiple connection pins 451 in each of the -X-axis direction and the +X-axis direction.

In an embodiment, at least some of the second contact pins 450 may be disposed on the second printed circuit board 410. For example, some of the second contact pins 450 may be disposed on the surface of the second printed circuit board 410 oriented in the -Z-axis direction. Referring to FIG. 4C, the second contact pins 450 may extend along the Y-axis direction on the second printed circuit board 410. Referring to FIGS. 4A, 4B, 4C, and 4D, the second contact pins 450 may extend in the length direction of the second camera unit 400 (e.g., the Y-axis direction) and may be bent at least in part and extend in the height direction of the second camera unit 400 (e.g., the Z-axis direction).

In an embodiment, protrusions 460 may be disposed on one surface of the second housing 440. For example, the protrusions 460 may be disposed on the surface of the second housing 440 where the second contact pins 450 are disposed. The protrusions 460 may extend in a direction away from the one surface of the second housing 440.

In an embodiment, the protrusions 460 may be disposed to be spaced apart from the second contact pins 450 in opposite directions, respectively. For example, the protrusions 460 may be respectively positioned in the -X-axis and +X-axis directions relative to the multiple second contact pins 450.

In an embodiment, when the first camera unit 300 and the second camera unit 400 are coupled, the protrusions 460 may be inserted into the coupling openings 343 (see FIG. 3A) of the first camera unit 300. The protrusions 460 may serve to prevent the first camera unit 300 from rotating relative to the second camera unit 400 or moving in a direction substantially perpendicular to the protrusions 460 when the first camera unit 300 and the second camera unit 400 are in a coupled state.

Although the second camera unit 400 is illustrated in FIG. 4A as including the protrusions 460, the second camera unit 400 according to an embodiment may not include the protrusions 460. In the case where the second camera unit 400 does not include the protrusions 460, the fixing pins 452 of the second camera unit 400 may perform the role of the protrusions 460. For example, the fixing pins 452 may be disposed in the coupling area 342 (see FIG. 3A) of the first camera unit 300 (see FIG. 3A) to prevent the first camera unit 300 from rotating or moving relative to the second camera unit 400.

In an embodiment, the first camera unit 300 and the second camera unit 400 may include a connection structure that allows them to be electrically connected while being coupled to one another. For example, the connection structure may include the first contact pins 350 of the first camera unit 300 and the second contact pins 450 of the second camera unit 400, which electrically connect the first camera unit 300 and the second camera unit 400. In addition, the connection structure may include the coupling openings 343 of the first camera unit 300 and the protrusions 460 of the second camera unit 400, which serve to fix the first camera unit 300 and the second camera unit 400 in the coupled state.

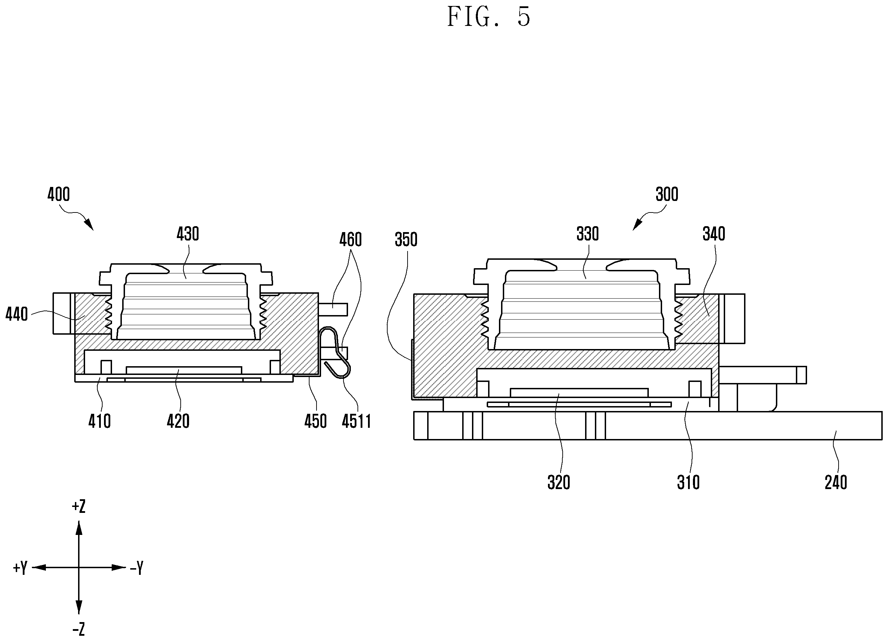

FIG. 5 is a view illustrating a first camera unit 300 and a second camera unit 400 according to an embodiment of the disclosure.

FIG. 5 may illustrate a state before the first camera unit 300 and the second camera unit 400 according to an embodiment of the disclosure are coupled.

Referring to FIG. 5, the first camera unit 300 according to an embodiment may include a first printed circuit board 310, a first image sensor 320, a first lens assembly 330, a first housing 340, and/or a first contact pin 350.

Referring to FIG. 5, the second camera unit 400 according to an embodiment may include a second printed circuit board 410, a second image sensor 420, a second lens assembly 430, a second housing 440, and/or a second contact pin 450.

In an embodiment, the first printed circuit board 310, the first image sensor 320, and the first lens assembly 330 of the first camera unit 300 may be arranged sequentially in the height direction (e.g., along the Z-axis direction). For example, the first image sensor 320 may be positioned in the +Z-axis direction of the first printed circuit board 310. The first lens assembly 330 may be positioned in the +Z-axis direction of the first image sensor 320.

In an embodiment, the first lens assembly 330 may collect light emitted from an object positioned outside. The first image sensor 320 may convert the light transmitted from the first lens assembly 330 into electrical signals. The first image sensor 320 may be electrically connected to the first printed circuit board 310.

In an embodiment, the first housing 340 may be arranged to surround at least part of the first lens assembly 330. For example, the first housing 340 may be disposed on one surface of the first printed circuit board 310 and arranged to surround the outer periphery of the first lens assembly 330.

In an embodiment, the first contact pin 350 may be disposed on at least one surface of the first housing 340. For example, referring to FIG. 5, the first contact pin 350 may be disposed on one surface of the first housing 340 and may extend along the height direction (e.g., the Z-axis direction) of the first camera unit 300.

In an embodiment, the first contact pin 350 may be in contact with the first printed circuit board 310 at least in part. For example, a portion of the first contact pin 350 may extend along the length direction of the first camera unit 300 (e.g., the Y-axis direction) and may be in contact with the first printed circuit board 310.

In an embodiment, the second printed circuit board 410, the second image sensor 420, and the second lens assembly 430 of the second camera unit 400 may be arranged sequentially in the height direction (e.g., along the Z-axis direction). For example, the second image sensor 420 may be positioned in the +Z-axis direction of the second printed circuit board 410. The second lens assembly 430 may be positioned in the +Z-axis direction of the second image sensor 420.

In an embodiment, the second lens assembly 430 may collect light emitted from an object positioned outside. The second image sensor 420 may convert the light transmitted from the second lens assembly 430 into electrical signals. The second image sensor 420 may be electrically connected to the second printed circuit board 410.

In an embodiment, the second housing 440 may be arranged to surround at least part of the second lens assembly 430. For example, the second housing 440 may be disposed on one surface of the second printed circuit board 410 and arranged to surround the outer periphery of the second lens assembly 430.

In an embodiment, the second contact pin 450 may be disposed on at least one surface of the second housing 440. For example, referring to FIG. 5, the second contact pin 450 may be disposed on one surface of the second housing 440. The one surface of the second housing 440 may be the surface of the second housing 440 facing the first housing 340 of the first camera unit 300. The second contact pin 450 may extend along the height direction (e.g., the Z-axis direction) of the second camera unit 400.

In an embodiment, the second contact pin 450 may be in contact with the second printed circuit board 410 at least in part. For example, a portion of the second contact pin 450 may extend along the length direction of the second camera unit 400 (e.g., the Y-axis direction) and may be in contact with the second printed circuit board 410.

In an embodiment, the second contact pin 450 may include a contact area 4511. When the first camera unit 300 and the second camera unit 400 are coupled, the second contact pin 450 may come into contact with the first contact pin 350 at the contact area 4511.

In an embodiment, the contact area 4511 of the second contact pin 450 may include a bent shape at least in part. For example, the contact area 4511 may extend in a direction away from the second housing 440, may then be bent at least in part, and may extend toward the second housing 440.

In an embodiment, the contact area 4511 of the second contact pin 450 may include an elastic material. When the first camera unit 300 and the second camera unit 400 are coupled, the contact area 4511 may come into contact with the first contact pin 350 and may be elastically deformed in shape.

In an embodiment, protrusions 460 may extend from at least one surface of the second housing 440. For example, the protrusions 460 may be disposed on the surface of the second housing 440 facing the first housing 340 and may extend in a direction toward the first housing 340.

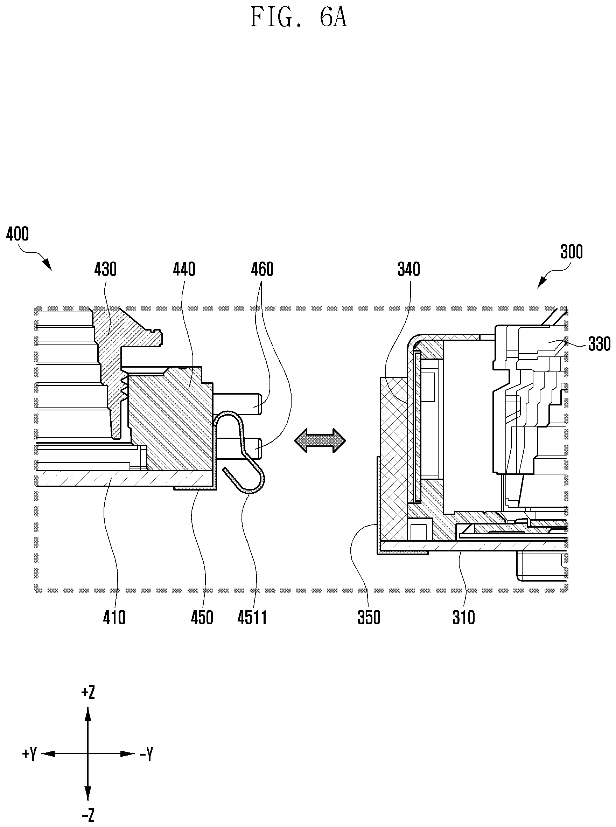

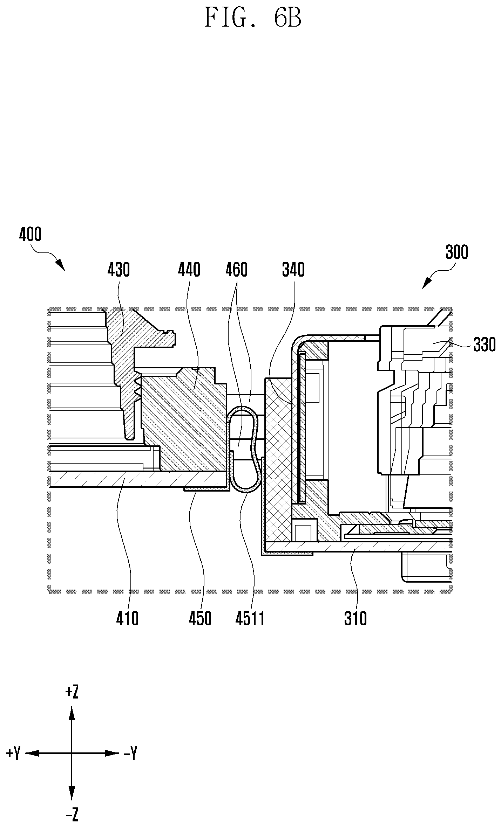

FIGS. 6A and 6B are views illustrating the coupling of the first camera unit 300 and the second camera unit 400 according to an embodiment of the disclosure.

FIG. 6A may illustrate a state before the first camera unit 300 and the second camera unit 400 according to an embodiment of the disclosure are coupled. FIG. 6B may illustrate a state in which the first camera unit 300 and the second camera unit 400 according to an embodiment of the disclosure are coupled.

Referring to FIGS. 6A and 6B, in a state of the coupling of the first camera unit 300 and the second camera unit 400, the first camera unit 300 and the second camera unit 400 may be moved in a direction in which they become closer to each other, allowing the first camera unit 300 and the second camera unit 400 to be coupled.

Referring to FIGS. 6A and 6B, when the first camera unit 300 and the second camera unit 400 are coupled, the surface of the first housing 340, on which the first contact pin 350 is disposed, may approach the surface of the second housing 440, on which the second contact pin 450 is disposed.

Referring to FIG. 6B, when the first camera unit 300 and the second camera unit 400 are coupled, the first contact pin 350 of the first camera unit 300 may be brought into contact, at least in part, with the second contact pin 450 of the second camera unit 400. For example, the second contact pin 450 may come into contact with the first contact pin 350 at the contact area 4511. The first contact pin 350 and the second connection pin 450 may come into contact with each other, allowing the first camera unit 300 and the second camera unit 400 to be electrically connected.

Referring to FIG. 6B, when the first camera unit 300 and the second camera unit 400 are coupled, the protrusions 460 of the second camera unit 400 may be at least partially inserted into the first camera unit 300. For example, the distal ends of the protrusions 460 (e.g., the distal ends of the protrusions 460 facing the first camera unit 300) may be partially inserted into the coupling openings 343 in the first camera unit 300 (see FIG. 3A). When the distal ends of the protrusions 460 are inserted into the coupling openings 343 in the first camera unit 300, the position of the second camera unit 400 may be fixed relative to the first camera unit 300.

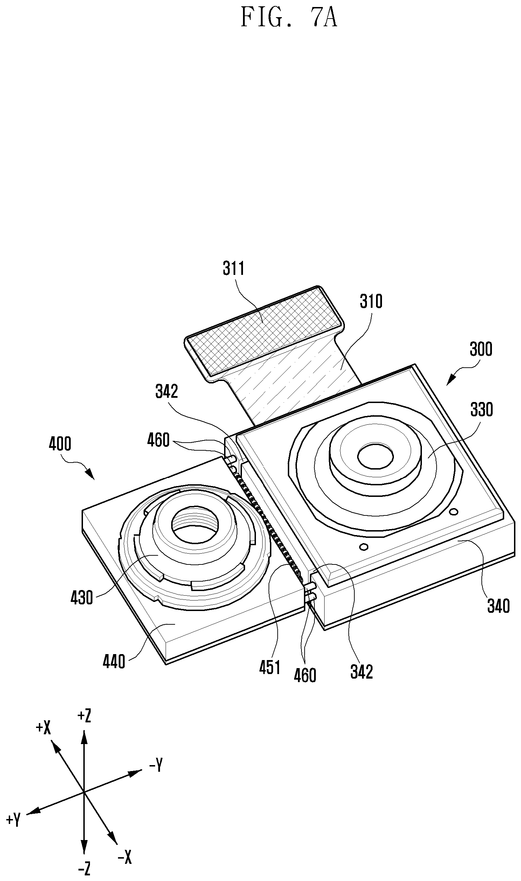

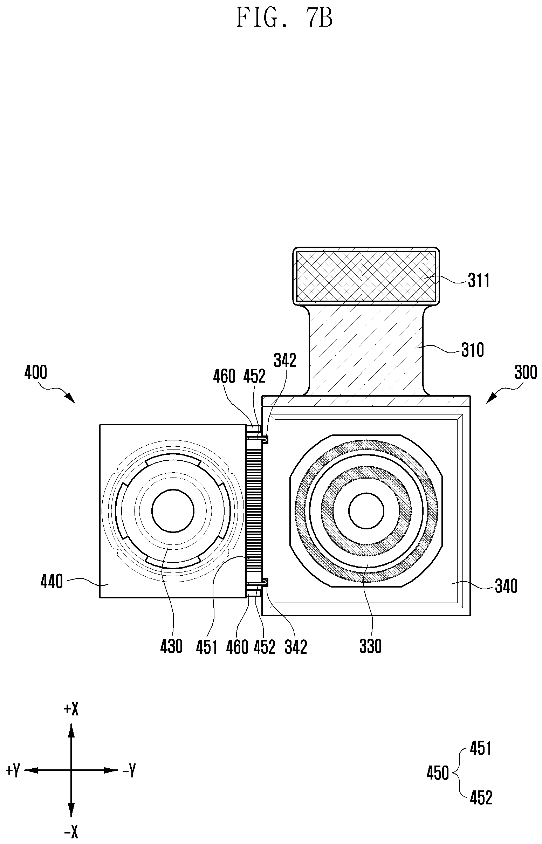

FIGS. 7A and 7B are views illustrating a state in which the second camera unit 400 is coupled to the first camera unit 300 according to an embodiment of the disclosure.

FIG. 7A is a perspective view illustrating the coupled state of the first camera unit 300 and the second camera unit 400 according to an embodiment. FIG. 7B is a plan view illustrating the coupled state of the first camera unit 300 and the second camera unit 400 according to an embodiment.

In an embodiment, the coupled state of the first camera unit 300 and the second camera unit 400 may refer to a state in which the fixing pins 452 of the second camera unit 400 are positioned in the coupling areas 342 of the first camera unit 300, and the protrusions 460 of the second camera unit 400 are inserted into the coupling openings 343 in the first camera unit 300.

Referring to FIGS. 7A and 7B, the second camera unit 400 may be coupled to one side of the first camera unit 300. For example, the second camera unit 400 may be coupled to the side surface of the first camera unit 300 oriented in the +Y-axis direction.

Although FIGS. 7A and 7B illustrate that the second camera unit 400 is coupled to the side surface of the first camera unit 300 in the +Y-axis direction, this is merely exemplary, and the position where the second camera unit 400 is coupled is not limited thereto. For example, the second camera unit 400 may also be coupled to the side surface of the first camera unit 300 in the -Y-axis direction and/or in the -X-axis direction.

Referring to FIGS. 7A and 7B, when the first camera unit 300 and the second camera unit 400 are coupled, the fixing pins 452 of the second camera unit 400 may be disposed in the coupling areas 342 of the first camera unit 300, and the protrusions 460 of the second camera unit 400 may be inserted into the coupling openings 343 (see FIG. 3A) in the first camera unit 300.

In an embodiment, the fixing pins 452 of the second camera unit 400 may be disposed in the coupling areas 342 of the first camera unit 300 to prevent movement of the first camera unit 300 and the second camera unit 400 in a direction away from each other.

In an embodiment, the protrusions 460 of the second camera unit 400 may be inserted into the coupling openings 343 in the first camera unit 300 to prevent movement of the second camera unit 400 in a direction substantially perpendicular to the insertion direction of the protrusions 460 (e.g., the X-axis direction) relative to the first camera unit 300.

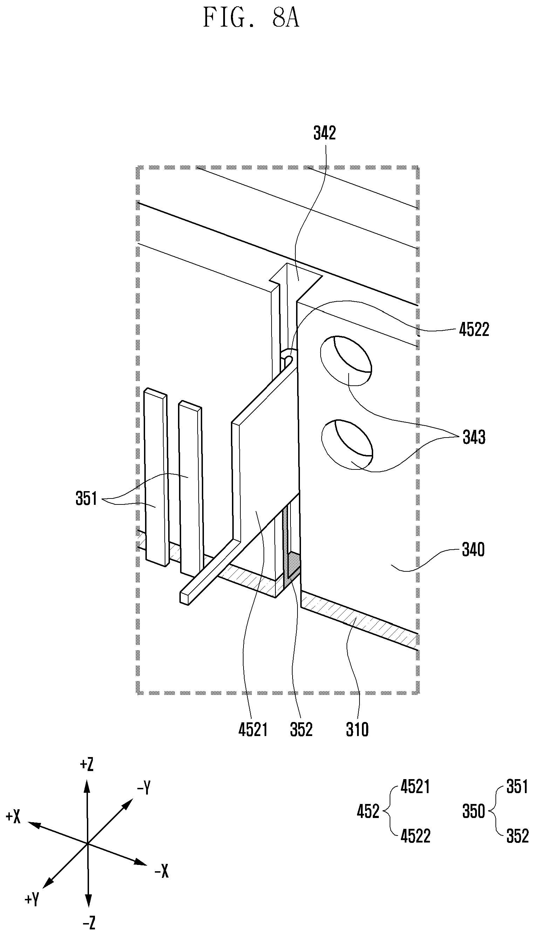

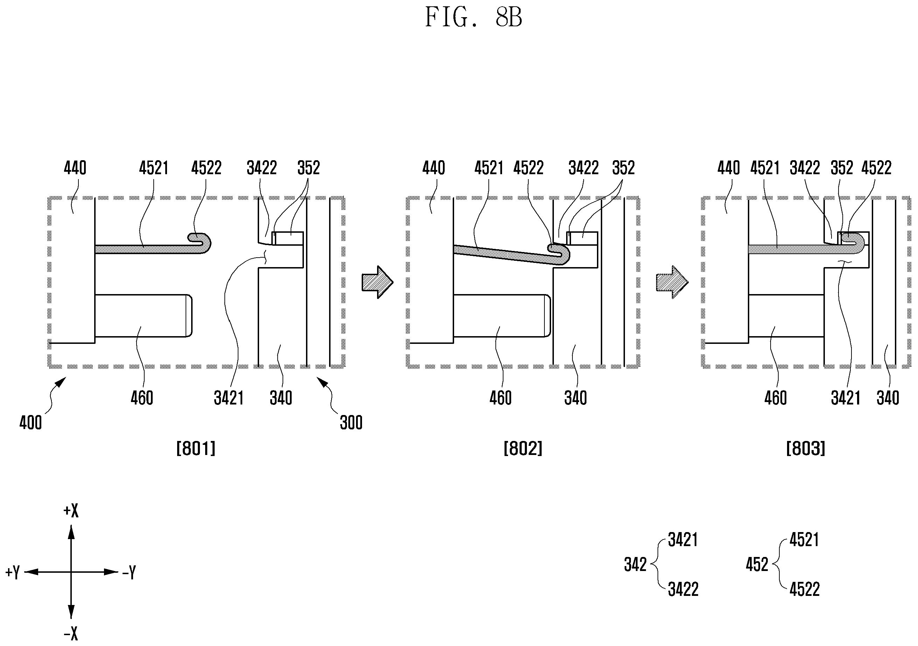

FIGS. 8A and 8B are views illustrating a fixing pin 452 of the second camera unit 400 coupled to a coupling area 342 in the first camera unit 300 according to an embodiment of the disclosure.

FIG. 8A is a view illustrating the state in which the fixing pin 452 is disposed in the coupling area 342. FIG. 8B is a view illustrating the process in which the fixing pin 452 is disposed in the coupling area 342.

In an embodiment, the fixing pin 452 of the second camera unit 400 may extend in a direction toward the first camera unit 300. For example, the fixing pin 452 may include an extension area 4521 that extends in the direction toward the first camera unit 300. The extension area 4521 may extend in both the height direction of the second camera unit 400 (e.g., the Z-axis direction) and the length direction of the second camera unit 400 (e.g., the Y-axis direction). The fixing pin 452 may include a fixing area 4522 at its distal end. For example, the fixing area 4522 may refer to the area positioned at the distal end of the extension area 4521.

In an embodiment, the fixing area 4522 may include a shape that is bent at least in part and extends. For example, the fixing area 4522 may extend in a direction toward the first camera unit 300, may be then bent at least in part, and may extend in a direction toward the second camera unit 400. Because the fixing area 4522 includes the shape that is bent and extends, a portion of the fixing area 4522 may be more easily fixed and disposed in the coupling area 342.

Referring to FIG. 8A, the first contact pin 350 may include a first connection pin 351 and/or a coupling pin 352. The first connection pin 351 may be disposed on one surface of the first housing 340 (e.g., the surface oriented in the +Z-axis direction). The coupling pin 352 may be disposed in the coupling area 342 of the first housing 340. When the first camera unit 300 and the second camera unit 400 are coupled, the first connection pin 351 may come into contact with the second connection pin 451, and the coupling pin 352 may come into contact with the fixing pin 452.

Referring to FIG. 8B, the process in which the fixing pin 452 is disposed in the coupling area 342 may include operation 801 where the fixing pin 452 and the coupling area 342 are spaced apart from each other, operation 802 where the fixing pin 452 is partially inserted into the coupling groove 3421, and/or operation 803 where the fixing pin 452 is partially disposed in the coupling area 342.

Referring to FIG. 8B, the coupling area 342 may include a coupling groove 3421 and/or an engagement area 3422. The coupling groove 3421 may define a space into which the fixing pin 452 is inserted. The engagement area 3422 may be provided on one side of the coupling groove 3421.

Referring to FIG. 8B, the first camera unit 300 may include a coupling pin 352 disposed in the coupling area 342. For example, the coupling pin 352 may be at least partially disposed on one surface of the engagement area 3422 (e.g., the surface of the locking region 3422 oriented in the +Y-axis direction).

In an embodiment, in operation 801, where the fixing pin 452 and the coupling area 342 are positioned at a distance from each other, the first camera unit 300 and the second camera unit 400 may be positioned at a distance from each other.

In an embodiment, in operation 802, where the fixing pin 452 is partially inserted into the coupling area 342, the fixing area 4522 of the fixing pin 452 may be inserted into the coupling groove 3421 in the coupling area 342. The fixing area 4522 of the fixing pin 452 may be inserted into the coupling groove 3421 and may move in the direction toward the first camera unit 300 (e.g., the -Y-axis direction) while being in contact with the engagement area 3422.

In an embodiment, the engagement area 3422 may have a surface inclined with respect to the length direction of the first camera unit 300 (e.g., the Y-axis direction). For example, the engagement area 3422 may have one surface extending to be inclined with respect to a direction parallel to the Y-axis direction such that the width of the coupling groove 3421 (e.g., the length of the coupling groove 3421 in the X-axis direction), which is formed on one side of the engagement area 3422, decreases toward the inward direction of the first housing 340 (e.g., the -Y-axis direction).

**In** an embodiment, the fixing pin 452 may include an elastic material. Because the fixing pin 452 includes an elastic material, the fixing pin 452 may be elastically deformed at least in part during operation 802, where the fixing pin 452 is partially inserted into the coupling groove 3421.

**In** an embodiment, because the engagement area 3422 has the inclined shape, the fixing pin 452 may be more easily inserted into the coupling groove 3421. By including the elastic material, the fixing pin 452 may be inserted into the coupling groove 3421 while being elastically deformed in a direction toward the protrusion 460 from the fixing pin 452 along the inclined shape of the engagement area 3422. For example, referring to FIG. 8B, the fixing pin 452 may come into contact with the inclined shape of the locking region 3422 while moving in the +Y-axis direction, thereby receiving a force in the x-axis direction, so that the fixing pin 452 may be at least partially deformed in the direction toward the protrusion 460 and inserted into the coupling groove 3421.

In an embodiment, during operation 803, where the fixing pin 452 is partially disposed in the coupling area 342, the fixing area 4522 of the fixing pin 452 may be disposed in the coupling area 342 while being in contact with the coupling pin 352 of the first camera unit 300. The fixing pin 452 of the second camera unit 400 and the coupling pin 352 of the first camera unit 300 may come into contact with each other, thereby electrically connecting the second camera unit 400 to the first camera unit 300.

In an embodiment, the coupling pin 352 and the fixing pin 452 may be used for power connection, ground connection, and/or data transmission between the first camera unit 300 and the second camera unit 400. Since the coupling pin 352 and the fixing pin 452 are in contact with and are electrically connected to each other, power connection, ground connection, and/or data transmission between the first camera unit 300 and the second camera unit 400 may be possible.

In an embodiment, the coupling pin 352 and the fixing pin 452 may come into physical contact with each other without being electrically connected. Even if the coupling pin 352 and the fixing pin 452 are not electrically connected, they may be still in physical contact with each other and serve to fix the first camera unit 300 and the second camera unit 400 in the coupled state. When the coupling pin 352 and the fixing pin 452 are not electrically connected, the electrical connection between the first camera unit 300 and the second camera unit 400 may be achieved through contact between the first connection pin 351 and the second connection pin 451.

In an embodiment, because the fixing pin 452 includes an elastic material, the fixing pin 452 may maintain its contact state with the coupling pin 352 through elastic force while disposed in the coupling area 342.

Referring to FIG. 8B, the fixing pin 452 is illustrated as being formed in a loop shape that is bent at least in part. However, this is merely an example, and the shape of the fixing pin 452 is not limited thereto. For example, the fixing pin 452 may also include a spring shape with elasticity or a pogo pin shape.

In an embodiment, since the engagement area 3422 includes the inclined shape, it may be difficult for the fixing pin 452 placed in the coupling area 3422 to disengage from the coupling area 3422 without external force. For example, since one surface of the engagement area 3422 is inclined, the fixing pin 452 may easily move in the direction toward the coupling area 342 (e.g., the direction in which the fixing pin 452 shifts from operation 801 to operation 803). However, it may be relatively difficult for the fixing pin 452 to move in the direction away from the coupling area 342 (e.g., the direction in which the fixing pin 452 shifts from operation 803 to operation 801).

In an embodiment, the first camera unit 300 and the second camera unit 400 may be separated again after being coupled. For example, the fixing pin 452 may be adjusted to disengage from the coupling area 342 through its elasticity, allowing the first camera unit 300 and the second camera unit 400 to be separated.

In an embodiment, when the first camera unit 300 and the second camera unit 400 are separated after being in the coupled state, force may be applied to the fixing pin 452 via a separate member (e.g., a disassembly jig) to move the fixing pin 452 in a direction away from the coupling area 342 while the fixing pin 452 remains placed in the coupling area 342. The fixing pin 452 may disengage from the coupling area 342 by receiving force through the separate member.

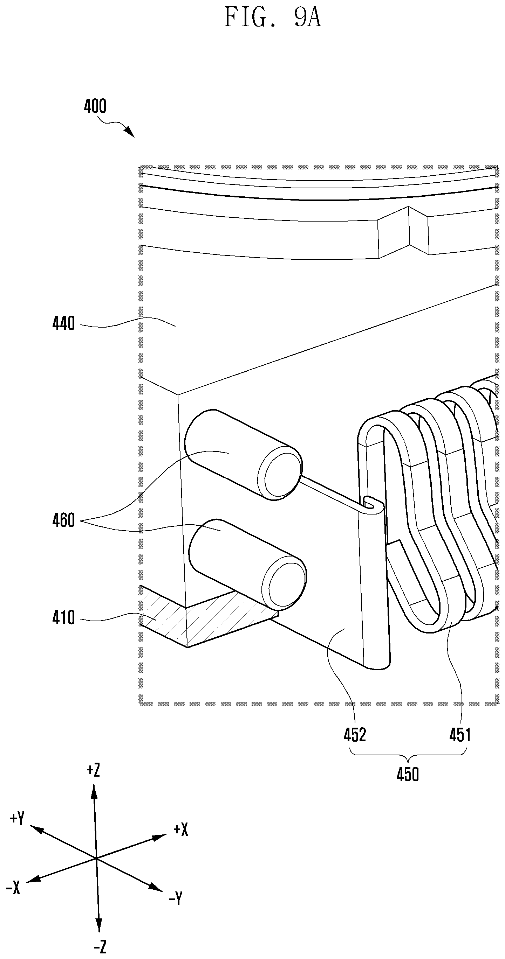

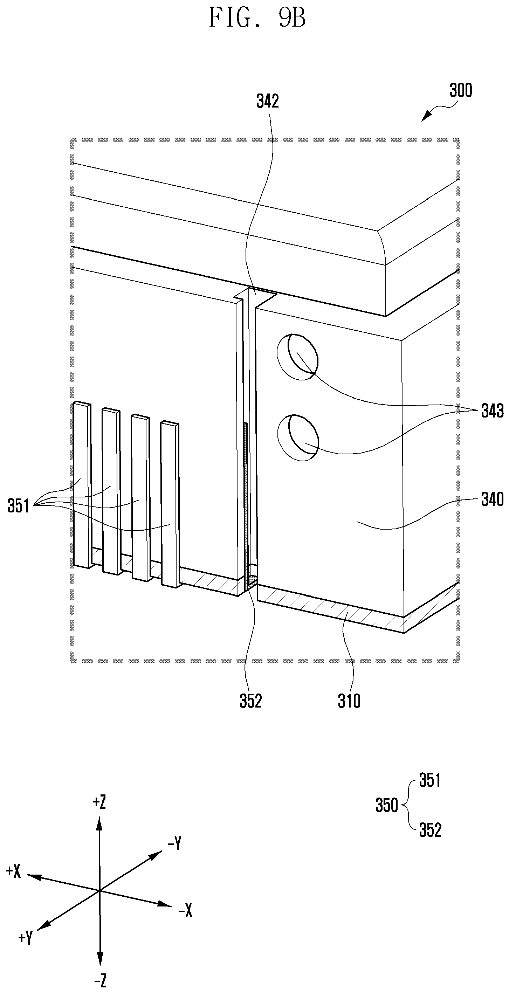

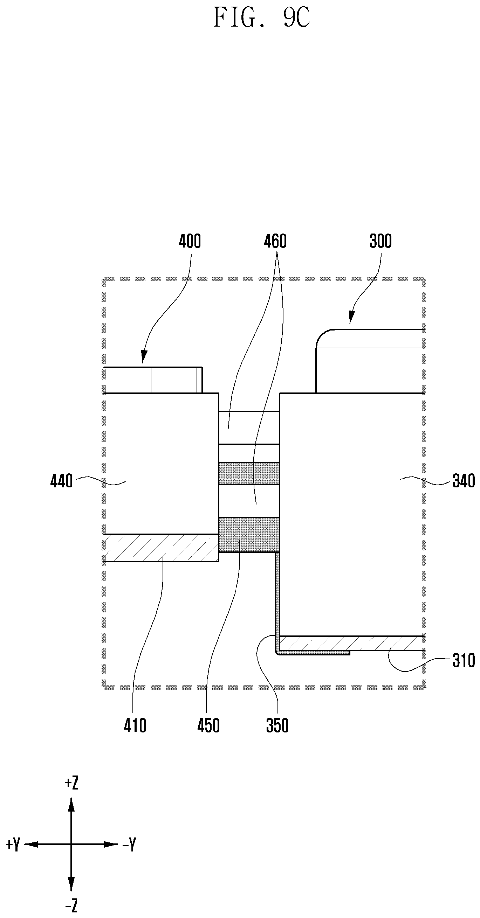

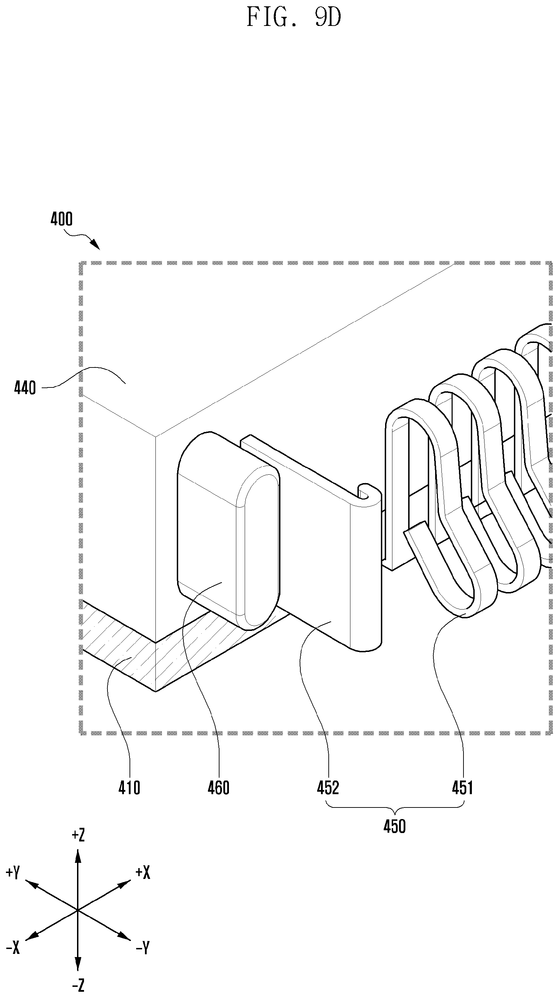

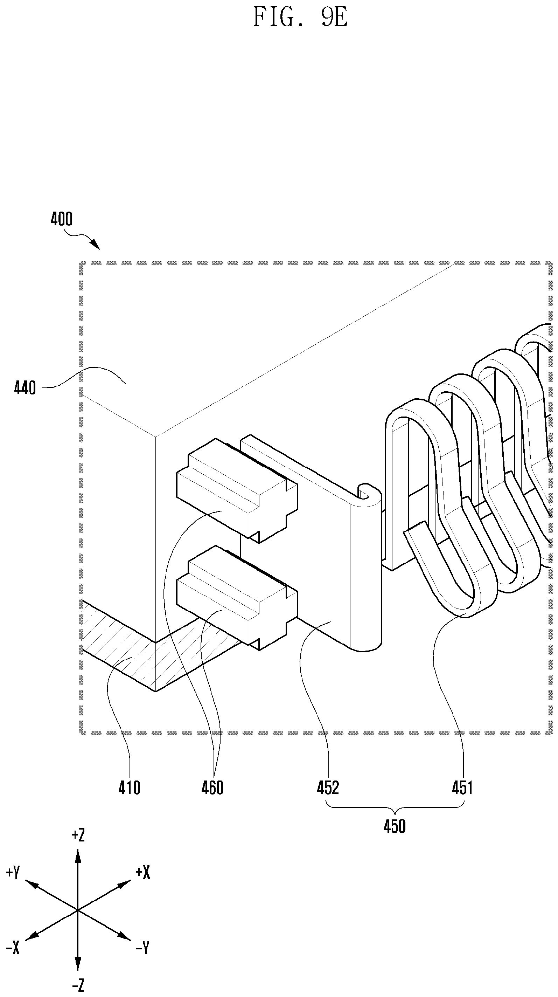

FIGS. 9A, 9B, 9C, 9D, and 9E are views illustrating the coupling openings 343 in the first camera unit 300 and the protrusions 460 of the second camera unit 400 according to an embodiment of the disclosure.

FIG. 9A illustrates the protrusions 460 according to an embodiment. FIG. 9B illustrates the coupling openings 343 according to an embodiment. FIG. 9C illustrates the state in which the protrusions 460 are coupled to the coupling openings 343 according to an embodiment. FIG. 9D illustrates a protrusion 460 extending in the height direction. FIG. 9E illustrates protrusions 460 having a cross-shaped cross-section.

Referring to FIG. 9A, the protrusions 460 may extend to protrude from one surface of the second housing 440. The protrusions 460 may be spaced apart from each other in one direction of the second contact pins 450 (e.g., in the -X-axis direction).

In an embodiment, the protrusions 460 may have a circular cross-section. The protrusions 460 may extend in the shape of a pillar with a circular cross-section.

In an embodiment, multiple protrusions 460 may be provided in one direction of the second contact pins 450. For example, referring to FIG. 9A, two protrusions 460 may be disposed at a distance from each other in the height direction of the second camera unit 400 (e.g., the Z-axis direction).

Referring to FIG. 9B, the coupling openings 343 may be provided in at least a portion of the first housing 340. For example, the coupling openings 343 may be provided in one direction of the coupling area 342 (e.g., in the -X-axis direction).

In an embodiment, the coupling openings 343 may include circular openings. For example, the coupling openings 343 may be formed as circular openings to allow the insertion of the protrusions 460 with the circular cross-section. The coupling openings 343 may extend toward the interior of the first housing 340 (e.g., in the -Y-axis direction) by a predetermined length. The length by which the coupling openings 343 extend may be shorter than the length by which the protrusions 460 extends.

In an embodiment, multiple coupling openings 343 may be formed in one direction of the coupling area 342. For example, the number of coupling openings 343 may correspond to the number of protrusions 460 to be inserted into the coupling openings 343. Referring to FIG. 9B, two coupling openings 343 corresponding to the two protrusions 460 may be spaced from each other in the height direction of the first camera unit 300 (e.g., the Z-axis direction).

Referring to FIG. 9C, when the first camera unit 300 and the second camera unit 400 are coupled, multiple protrusions 460 may be inserted into the corresponding coupling openings 343 at their respective positions. Since the protrusions 460 may be inserted only up to the length by which the coupling openings 343 extend toward the interior of the first housing 340, the first camera unit 300 and the second camera unit 400 may be prevented from coming closer than a predetermined length when the first camera unit 300 and the second camera unit 400 are coupled.

Referring to FIG. 9D, according to an embodiment, a single protrusion 460 may be provided in one direction of the second contact pins 450. For example, as illustrated in FIG. 9d, the protrusion 460 may extend longer in the height direction of the second camera unit 400 (e.g., the Z-axis direction) compared to the protrusions 460 illustrated in FIG. 9A.

In an embodiment, when a single protrusion 460 is provided in one direction of the second contact pins 450, a single coupling opening 343 may also be provided into which the protrusion 460 is inserted and which has a shape corresponding to the protrusion 460.

Although the protrusions 460 in FIG. 9A are illustrated as extending while having a circular cross-section, this is merely an example, and the cross-sectional shape of the protrusion 460 is not limited thereto.

Referring to FIG. 9E, the protrusions 460 may have a cross-shaped cross-section. For example, the protrusions 460 may be formed to extend in a pillar shape with a cross-shaped cross-section.

In an embodiment, when the protrusions 460 have the cross-shaped cross-section, the coupling openings 343 into which the protrusions 460 are inserted may also have the corresponding cross-shaped cross-section.

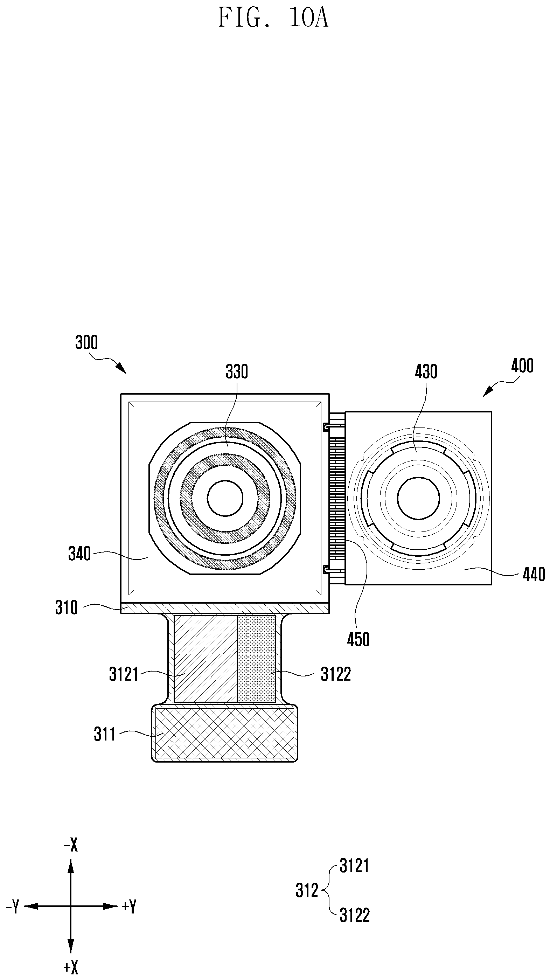

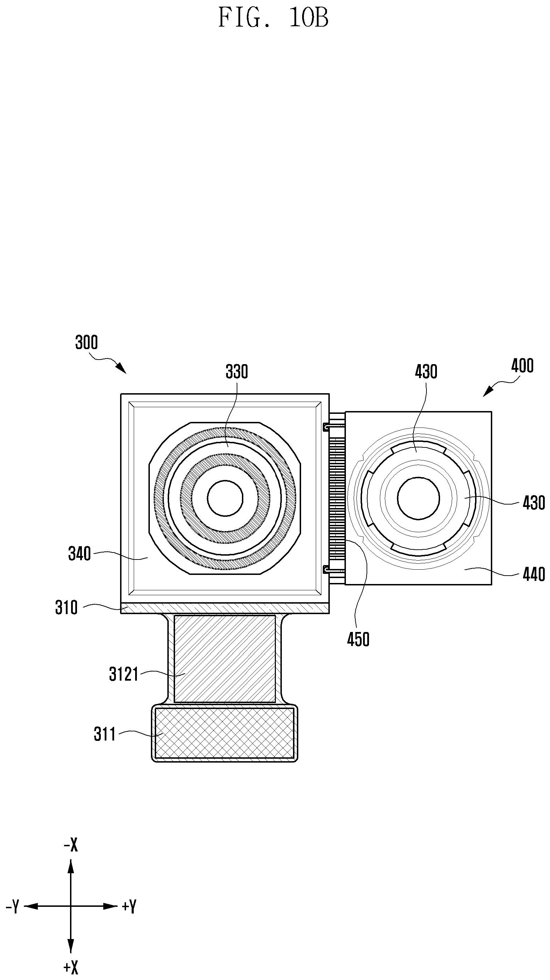

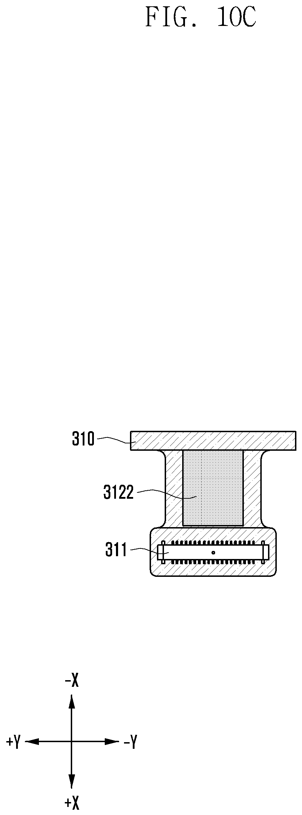

FIGS. 10A, 10B, and 10C are views illustrating a connector 311 and an electrical wire 312 according to an embodiment of the disclosure.

FIG. 10A is a view illustrating a first printed circuit board 310 including a first wire 3121 and a second wire 3122 according to an embodiment. FIG. 10B is a view illustrating the first printed circuit board 310 with the first wire 3121 disposed on one surface according to an embodiment. FIG. 10C is a view illustrating the first printed circuit board 310 with the second wire 3122 disposed on the other surface according to an embodiment.

In an embodiment, the first printed circuit board 310 may, at least in part, extend in a direction away from the first housing 340. The first printed circuit board 310 may extend in at least one direction along the side surface of the first housing 340 where the second housing 440 is not coupled. For example, referring to FIG. 10A, the first printed circuit board 310 may extend in the +X-axis direction, which is one of the directions of side surfaces of the first housing 340 where the second housing 440 is not coupled.

In an embodiment, the first printed circuit board 310 may include the connector 311 and/or the electrical wire 312. In an embodiment, the connector 311 may be disposed on a main printed circuit board 240 (see FIG. 2). Via the connector 311, the first camera unit 300 and the second camera unit 400 may be electrically connected to the main printed circuit board 240 (see FIG. 2).

In an embodiment, the electrical wire 312 may include a first wire 3121 and/or a second wire 3122. The first wire 3121 may refer to a wire electrically connected to the first camera unit 300. The second wire 3122 may refer to the wire electrically connected to the second camera unit 400. The first wire 3121 and the second wire 3122 may each be connected to the connector 311 at one end.

In an embodiment, the first wire 3121 and the second wire 3122 may extend toward the connector 311 positioned at one end of the first printed circuit board 310. The first camera unit 300 may be electrically connected to the main printed circuit board 240 (see FIG. 2) via the first wire 3121 and the connector 311. Since the second camera unit 400 is coupled to and electrically connected with the first camera unit 300, the second camera unit 400 may be electrically connected to the main printed circuit board 240 (see FIG. 2) via the first camera unit 300, the second wire 3122, and the connector 311.

In an embodiment, both the first wire 3121 and the second wire 3122 may be disposed on one surface of the first printed circuit board 310. For example, referring to FIG. 10A, the first wire 3121 and the second wire 3122 may be arranged side by side on one surface of the first printed circuit board 310 in a direction perpendicular to the extension direction of the first printed circuit board 310 (e.g., the Y-axis direction), and may extend along the extension direction of the first printed circuit board 310 (e.g., the X-axis direction).

In an embodiment, the first wire 3121 and the second wire 3122 may be disposed on different surfaces of the first printed circuit board 310. For example, referring to FIGS. 10B and 10C, the first wire 3121 may be disposed on one surface of the first printed circuit board 310, while the second wire 3122 may be disposed on the other surface of the first printed circuit board 310 opposite to the one surface.

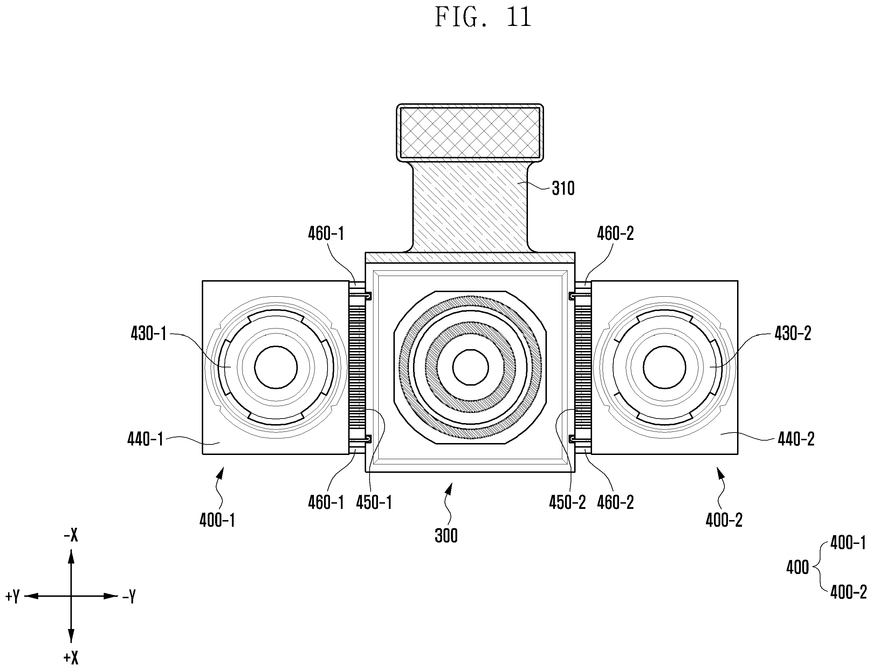

FIG. 11 is a view illustrating two second camera units 400 coupled to a first camera unit 300 according to an embodiment of the disclosure.

In an embodiment, the second camera units 400 may include a (2-1)^{th} camera unit 400-1 and/or a (2-2)^{th} camera unit 400-2. The (2-1)^{th} camera unit 400-1 and the (2-2)^{th} camera unit 400-2 may have substantially the same configuration as the second camera unit 400 illustrated in FIG. 4A.

Referring to FIG. 11, the second camera units 400 may be disposed in opposite directions of the first camera unit 300. For example, the (2-1)^{th} camera unit 400-1 may be disposed in one direction of the first camera unit 300 (e.g., the +Y-axis direction), and the (2-2)^{th} camera unit 400-2 may be disposed in the opposite direction of the first camera unit 300 (e.g., the -Y-axis direction).

In an embodiment, the second camera units 400 disposed in the opposite directions of the first camera unit 300 may each be electrically connected to the first camera unit 300. For example, the (2-1)^{th} camera unit 400-1 may be electrically connected to the first camera unit 300 via a (2-1)^{th} contact pin 450-1. Similarly, the (2-2)^{th} camera unit 400-2 may be electrically connected to the first camera unit 300 via a (2-2)^{th} contact pin 450-2.

In an embodiment, the second camera units 400 disposed in the opposite directions of the first camera unit 300 may each be fixed in position while being in the coupled state with the first camera unit 300. For example, (2-1)^{th} protrusions 460-1 of the (2-1)^{th} camera unit 400-1 may be inserted into a portion of the first camera unit 300, thereby fixing the position of the (2-1)^{th} camera unit 400-1. (2-2)^{th} protrusions 460-2 of the (2-2)^{th} camera unit 400-2 may be inserted into a portion of the first camera unit 300, thereby fixing the position of the (2-2)^{th} camera unit 400-1.

Although FIG. 11 illustrates the second camera units 400 as being disposed in opposite directions of the first camera unit 300, this is merely an example. The second camera units 400 may be disposed not only in the opposite directions of the first camera unit 300 but also in a direction perpendicular to these directions. For example, the second camera units 400 may be disposed in all three directions relative to the first camera unit 300, except for the direction in which the first printed circuit board 310 extends relatively longer from the first camera unit 300, and may be connected to the first camera unit 300.

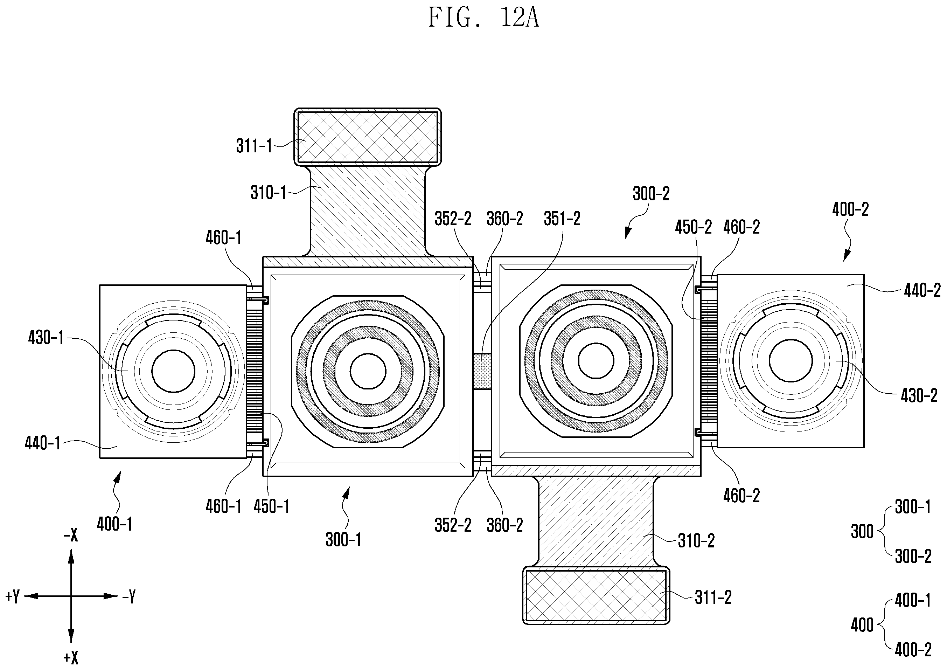

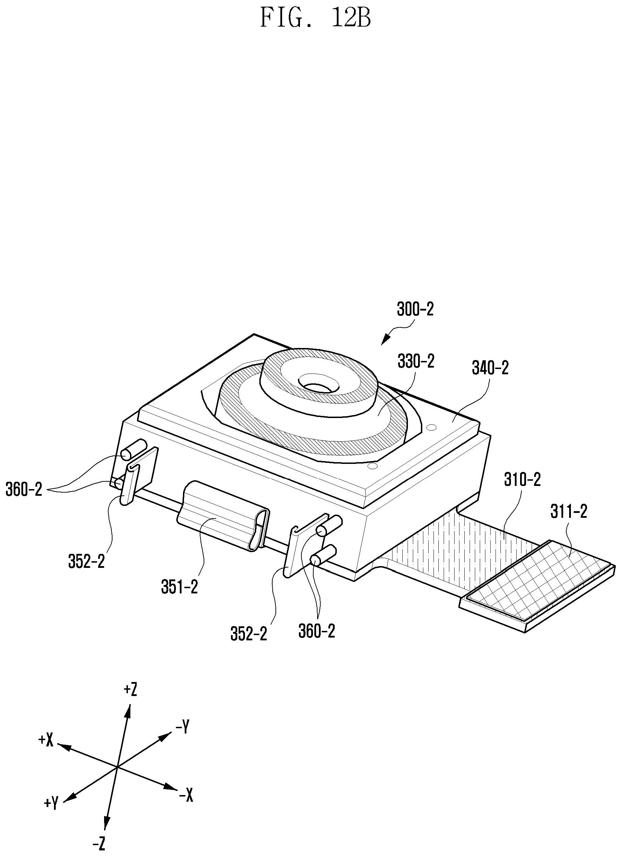

FIGS. 12A and 12B are views illustrating the (1-1)^{th} camera unit 300-1 and the (1-2)^{th} camera unit 300-2 according to an embodiment of the disclosure.

FIG. 12A is a view illustrating the state in which one second camera unit 400 is coupled to each of the (1-1)^{th} camera unit 300-1 and the (1-2)^{th} camera unit 300-2 according to an embodiment of the disclosure. FIG. 12B is a view illustrating the (1-2)^{th} camera unit 300-2 according to an embodiment of the disclosure.

In an embodiment, the first camera units 300 may include a (1-1)^{th} camera unit 300-1 and/or a (1-2)^{th} camera unit 300-2. The (1-1)^{th} camera unit 300-1 and the (1-2)^{th} camera unit 300-2 may have substantially the same configuration as the first camera unit 300 illustrated in FIG. 3A.

In an embodiment, the (1-2)^{th} camera unit 300-2 may be disposed in one direction of the (1-1)^{th} camera unit 300-1. For example, referring to FIG. 12A, the (1-2)^{th} camera unit 300-2 may be disposed in the -Y-axis direction relative to the (1-1)^{th} camera unit 300-1.

In an embodiment, the (1-1)^{th} camera unit 300-1 and the (1-2)^{th} camera unit 300-2 may each be connected to a second camera unit 400. For example, the (1-1)^{th} camera unit 300-1 may be electrically connected to the (2-1)^{th} camera unit 400-1 positioned in the +Y-axis direction relative to the (1-1)^{th} camera unit 300-1. The (1-2)^{th} camera unit 300-2 may be electrically connected to the (2-2)^{th} camera unit 400-2 positioned in the -Y-axis direction relative to the (1-2)^{th} camera unit 300-2.

Referring to FIG. 12B, the (1-2)^{th} camera unit 300-2 according to an embodiment may include protrusions 360-2. For example, multiple protrusions 360-2 may extend on the surface of the (1-2)^{th} camera unit 300-2 oriented in the +Y-axis direction.

In an embodiment, when the (1-1)^{th} camera unit 300-1 and the (1-2)^{th} camera unit 300-2 are coupled, the protrusions 360-2 of the (1-2)^{th} camera unit 300-2 may be inserted into coupling openings 343 (see FIG. 3A) provided in the (1-1)^{th} camera unit 300-1, thereby fixing the relative positions of the (1-1)^{th} camera unit 300-1 and the (1-2)^{th} camera unit 300-2.

Referring to FIG. 12B, the (1-2)^{th} camera unit 300-2 according to an embodiment may include an intermediate pin 351-2 and/or connection pins 352-2. The intermediate pin 351-2 and the connection pins 352-2 of the (1-2)^{th} camera unit 300-2 may be provided on the surface of the (1-2)^{th} camera unit 300-2 oriented in the +Y-axis direction.

In an embodiment, when the (1-1)^{th} camera unit 300-1 and the (1-2)^{th} camera unit 300-2 are coupled, the connection pins 352-2 of the (1-2)^{th} camera unit 300-2 may be disposed in the coupling areas 342 (see FIG. 3A) provided in the (1-1)^{th} camera unit 300-1, thereby preventing the (1-1)^{th} camera unit 300-1 and the (1-2)^{th} camera unit 300-2 from moving away from each other.

In an embodiment, the intermediate pin 351-2 of the (1-2)^{th} camera unit 300-2 may include an elastic material. When the (1-1)^{th} camera unit 300-1 and the (1-2)^{th} camera unit 300-2 are coupled, the intermediate pin 351-2 may be elastically deformed in shape. Since the intermediate pin 351-2 includes the elastic material, the intermediate pin may serve to provide elastic resistance to prevent the (1-1)^{th} camera unit 300-1 and the (1-2)^{th} camera unit 300-2 from coming abruptly close during the coupling of the (1-1)th camera unit 300-1 and the (1-2)th camera unit 300-2.

Referring to FIG. 12A, the first camera unit 300 and the second camera unit 400 are illustrated as being aligned and coupled along the length direction of the first camera unit 300 (e.g., the Y-axis direction) on substantially the same line. However, this is merely an example, and the coupling form of the first camera unit 300 and the second camera unit 400 is not limited thereto. For example, the (1-1)^{th} camera unit 300-1 and the (1-2)^{th} camera unit 300-2 may be aligned and coupled in the width direction of the first camera unit 300 (e.g., the X-axis direction). In addition, instead of the second camera unit 400 being coupled in the Y-axis direction of the first camera unit 300, the second camera unit 400 may also be coupled in the X-axis direction of the first camera unit 300.

In describing the embodiments of the disclosure, the fixing pins 452 and the protrusions 460 are illustrated as being formed on the second camera unit 400, while the coupling areas 342 and the coupling openings 343 are illustrated as being formed on the first camera unit 300. However, this is merely an example, and the inclusion of these components is not limited thereto. For example, the first camera unit 300 may include the fixing pin 452 and the protrusion 460, while the second camera unit 400 may include the coupling area 342 and the coupling opening 343. **In** such a case, the protrusions 460 provided on the first camera unit 300 may be inserted into the coupling openings 343 in the second camera unit 400 so that the first camera unit 300 and the second camera unit 400 are coupled.

**In** an electronic device 200 including the camera units 300 and 400 according to an embodiment of the disclosure, among the multiple camera units 300 and 400, only the first camera units 300-1 and 300-2 may be connected to the main printed circuit board 240, noise components introduced into the printed circuit boards (e.g., the (1-1)^{th} printed circuit board 310-1 and the (1-2)^{th} printed circuit board 310-2) connected to the main printed circuit board 240 may be reduced compared to the case where all the camera units 300 and 400 are individually connected to the main printed circuit board 240.

In an embodiment of the disclosure, an electronic device 200 may include a housing 210 forming an exterior of the electronic device 200, a main printed circuit board 240 disposed inside the housing 210, a first camera unit 220, and/or a second camera unit 230.

In an embodiment, the first camera unit 300 may include a first printed circuit board 310, a first image sensor 320, a first lens assembly 330, a first housing 340, and/or a first contact pin 350.

In an embodiment, the first camera unit 300 may be disposed in one direction of the main printed circuit board 240. In an embodiment, the first image sensor 320 may be disposed on the first printed circuit board 310. In an embodiment, the first lens assembly 330 may be disposed to correspond to the first image sensor 320. In an embodiment, the first housing 340 may surround the outer periphery of the first image sensor 320 and the first lens assembly 330. In an embodiment, the first contact pin 350 may be disposed on at least one surface of the first housing 340, and may be in contact with the first printed circuit board 310 at least in part to be electrically connected to the same.

In an embodiment, the second camera unit 400 may include a second printed circuit board 410, a second image sensor 420, a second lens assembly 430, a second housing 440, and/or a second contact pin 450.

In an embodiment, the second camera unit 400 may be disposed on one side of the first camera unit 300. In an embodiment, the second image sensor 420 may be disposed on the second printed circuit board 410. In an embodiment, the second lens assembly 430 may be disposed to correspond to the second image sensor 420. In an embodiment, the second housing 440 may surround the outer periphery of the second image sensor 420 and the second lens assembly 430, and may be coupled to the first housing 340 at least in part. In an embodiment, the second contact pin 450 may be disposed on at least one surface of the second housing 440, and may be in contact with the second printed circuit board 410 and the first contact pin 350 at least in part to be electrically connected to the same.

In an embodiment, the first printed circuit board 310 may include electrical wires 312 connected to the first camera unit 300 and the second camera unit 400, respectively.

In an embodiment, the first printed circuit board 310 may extend in a direction toward the main printed circuit board 240 and may be connected to the main printed circuit board 240.

In an embodiment, the first contact pin 350 may include multiple first connection pins 351 disposed at intervals on one surface of the first housing 340, and coupling pins 352 disposed with the multiple first connection pins 351 interposed therebetween.

In an embodiment, the first housing 340 may include a coupling area 342 in which the coupling pins 352 are disposed.

In an embodiment, the second contact pin 450 may include multiple second connection pins 451 disposed at intervals on one surface of the second housing 440, and fixing pins 452 disposed with the multiple first connection pins 451 interposed therebetween.

In an embodiment, the multiple first connection pins 351 may be in contact with the multiple second connection pins 451.

In an embodiment, the fixing pins 452 may be disposed in the coupling area 342 to be in contact with the coupling pins 352.

In an embodiment, the coupling area 342 of the first housing 340 may include a coupling groove 3421 into which the fixing pins 452 are inserted, and an engagement area 3422 provided on one side of the coupling groove 342.

In an embodiment, the locking area 3422 may have a surface formed on one side of the coupling groove 3421 to be inclined with respect to the length direction of the first camera unit 300 such that the width of the coupling groove 3421 decreases in the inward direction of the first housing 340.

In an embodiment, each of the first contact pin 350 and the second contact pin 450 may include an elastic material.

In an embodiment, the first housing 340 may include coupling openings 343 provided on opposite sides of the first contact pin 350.

In an embodiment, the second housing 440 may include protrusions 460 provided on opposite sides of the second contact pin 450.

In an embodiment, the protrusions 460 may be inserted into the coupling openings 343.

In an embodiment, the protrusions 460 may extend in the shape of a pillar with a circular cross-section.

In an embodiment, multiple protrusions 460 may be provided on each of the opposite sides of the second contact pin 450.

In an embodiment, multiple openings 343 may be provided on each of the opposite sides of the first contact pin 350.

According to an embodiment, the electronic device may include multiple second camera units 400.

In an embodiment, the multiple second camera units 400 may be coupled to and electrically connected with the first camera unit 300 in different directions relative to the first camera unit 300.

In an embodiment, the multiple second camera units 400 may include a (2-1)^{th} camera unit 400-1 coupled to the first camera unit 300 on one side of the first camera unit 300, and a (2-2)^{th} camera unit 400-2 coupled to the first camera unit 300 on the other side of the first camera unit 300.

In an embodiment, the electronic device may include multiple first camera units 300 and multiple second camera units 400.

In an embodiment, the multiple first camera units 300 may be at least partially coupled to one another, and each of the multiple second camera units 400 may be coupled to and electrically connected with at least one of the multiple first camera units 300.

In an embodiment, the multiple first camera units 300 may include a (1-1)^{th} camera unit 300-1, and a (1-2)^{th} camera unit 300-2 coupled to one side of the (1-1)^{th} camera unit 300-1.

In an embodiment, the multiple second camera units 400 may include a (2-1)^{th} camera unit 400-1 that is coupled to the (1-1)^{th} camera unit 300-1 on a side surface opposite to the side surface where the (1-2)^{th} camera unit 300-2 is coupled, and a (2-2)^{th} camera unit 400-2 that is coupled to the (1-2)^{th} camera unit 300-2 on a side surface opposite to the side surface where the (1-1)^{th} camera unit 300-1 is coupled.

In an embodiment, the (1-2)^{th} camera unit 300-2 may include an intermediate pin 351-2 that includes an elastic material and provides elastic resistance between the (1-1)^{th} camera unit 300-1 and the (1-2)^{th} camera unit 300-2.

In an embodiment, the first printed circuit board 310 may include a connector 311 disposed at one end of the first printed circuit board 310, a first wire 3121 electrically connected to the first camera unit 300, and a second wire 3122 electrically connected to the second camera unit 400.

In an embodiment, the first wire 3121 and the second wire 3122 may each extend toward the connector 311 on one surface of the first printed circuit board 310.

In an embodiment, the first wire 3121 may extend toward the connector 311 on the one surface of the first printed circuit board 310, and the second wire 3122 may extend toward the connector 311 on the other surface of the first printed circuit board 310.

In an embodiment, a camera device 300 or 400 may include the first camera unit 300 and/or the second camera unit 400.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration.

According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200) comprising:
a housing (210) forming an exterior of the electronic device;
a main printed circuit board (240) disposed inside the housing;
a first camera unit (300) disposed in one direction of the main printed circuit board, the first camera unit comprising a first printed circuit board (310), a first image sensor (320) disposed on the first printed circuit board, a first lens assembly (330) disposed to correspond to the first image sensor, a first housing (340) surrounding an outer periphery of the first image sensor and the first lens assembly, and a first contact pin (350) disposed on at least one surface of the first housing, the first contact pin being in contact with the first printed circuit board at least in part to be electrically connected to the first printed circuit board; and
a second camera unit (400) disposed on one side of the first camera unit, the second camera unit comprising a second printed circuit board (410), a second image sensor (420) disposed on the second printed circuit board, a second lens assembly (430) disposed to correspond to the second image sensor, a second housing (440) surrounding an outer periphery of the second image sensor and the second lens assembly and coupled to the first housing at least in part, and a second contact pin (450) disposed on at least one surface of the second housing, the second contact pin being in contact with the second printed circuit board at least in part to be electrically connected to the second printed circuit board,
wherein the first printed circuit board comprises electrical wires (312) connected to the first camera unit and the second camera unit, respectively, and extends in a direction toward the main printed circuit board to be connected to the main printed circuit board.

2. The electronic device of claim 1, wherein the first contact pin comprises multiple first connection pins (351) disposed at intervals on one surface of the first housing and coupling pins (352) with the multiple connection pins interposed therebetween,
wherein the first housing comprises a coupling area (342) in which the coupling pins are disposed,
wherein the second contact pin comprises multiple second connection pins (451) disposed at intervals on one surface of the second housing and fixing pins (452) disposed with the multiple second connection pins interposed therebetween,
wherein the multiple first connection pins are in contact with the multiple second connection pins, and
wherein the fixing pins are disposed in the coupling area to be in contact with the coupling pins.

3. The electronic device of claim 2, wherein the coupling area of the first housing comprises:
a coupling groove (3421) into which the fixing pins are inserted; and
an engagement area (3422) formed on one side of the coupling groove, and
wherein the engagement area comprises one surface formed on one side of the coupling groove to be inclined with respect to a length direction of the first camera unit such that a width of the coupling groove decreases in an inward direction of the first housing.

4. The electronic device of any one of claims 1 to 3, wherein the first contact pin and the second contact pin each comprise an elastic material.

5. The electronic device of any one of claims 1 to 4, wherein the first housing comprises coupling openings (343) provided on opposite sides of the first contact pin,
wherein the second housing comprises protrusions (460) provided on opposite sides of the second contact pin, and
wherein the protrusions are inserted into the coupling openings.

6. The electronic device of claim 5, wherein the protrusions extend in a shape of a pillar with a circular cross-section.

7. The electronic device of claim 5, wherein multiple protrusions are provided on each of the opposite sides of the second contact pin, and
wherein the coupling openings are formed on the opposite sides of the first contact pin.

8. The electronic device of any one of claims 1 to 7, wherein the electronic device comprises multiple second camera units, and
wherein the multiple second camera units are coupled to and electrically connected with the first camera unit in different directions relative to the first camera unit.

9. The electronic device of claim 8, wherein the multiple second camera units comprise:
a (2-1)^{th} camera unit (400-1) coupled to the first camera unit on one side of the first camera unit; and
a (2-2)^{th} camera unit (400-2) coupled to the first camera unit on another side of the first camera unit.

10. The electronic device of any one of claims 1 to 9, wherein the electronic device comprises multiple first camera units and multiple second camera units,
wherein the multiple first camera units are at least partially coupled to one another, and
wherein each of the multiple second camera units is coupled to and electrically connected with at least one of the multiple first camera units.

11. The electronic device of claim 10, wherein the multiple first camera units comprise:
a (1-1)^{th} camera unit (300-1); and
a (1-2)^{th} camera unit (300-2) coupled to one side of the (1-1)^{th} camera unit, and
wherein the multiple second camera units comprise:
a (2-1)^{th} camera unit (400-1) that is coupled to the (1-1)^{th} camera unit on a side surface opposite to the side surface where the (1-2)^{th} camera unit is coupled; and
a (2-2)^{th} camera unit (400-2) coupled to the (1-2)^{th} camera unit on a side surface opposite to the side surface where the (1-1)^{th} camera unit is coupled.

12. The electronic device of claim 11, wherein the (1-2)^{th} camera unit comprises an intermediate pin (351-2) that comprises an elastic material and provides elastic resistance between the (1-1)^{th} camera unit and the (1-2)^{th} camera unit.

13. The electronic device of any one of claims 1 to 12, wherein the first printed circuit board comprises:
a connector (311) disposed at one end of the first printed circuit board;
a first wire (3121) electrically connected to the first camera unit; and
a second wire (3122) electrically connected to the second camera unit.

14. The electronic device of claim 13, wherein the first wire and the second wire each extend toward the connector on one surface of the first printed circuit board.

15. **16.** The electronic device of claim 13, wherein the first wire extends toward the connector on the one surface of the first printed circuit board, and the second wire extends toward the connector on another surface of the first printed circuit board.
